(19) Europäisches Patentamt / European Patent Office / Office européen des brevets

(11) **EP 4 336 378 A1**

(12) **EUROPEAN PATENT APPLICATION**
published in accordance with Art. 153(4) EPC

(43) Date of publication:
**13.03.2024 Bulletin 2024/11**

(21) Application number: **22815120.5**

(22) Date of filing: **25.05.2022**

(51) International Patent Classification (IPC):
**G06F 16/33** (2019.01)  **G06F 16/332** (2019.01)
**G06N 3/04** (2023.01)  **G06N 3/08** (2023.01)
**G06N 5/04** (2023.01)

(86) International application number:
**PCT/CN2022/094995**

(87) International publication number:
**WO 2022/253074 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2021 CN 202110611218**

(71) Applicant: **Huawei Technologies Co., Ltd.
Longgang
Shenzhen, Guangdong 518129 (CN)**

(72) Inventors:
• **HOU, Lu**
  **Shenzhen, Guangdong 518129 (CN)**
• **SHANG, Lifeng**
  **Shenzhen, Guangdong 518129 (CN)**
• **JIANG, Xin**
  **Shenzhen, Guangdong 518129 (CN)**
• **QIAN, Li**
  **Shenzhen, Guangdong 518129 (CN)**

(74) Representative: **Grünecker Patent- und
Rechtsanwälte
PartG mbB
Leopoldstraße 4
80802 München (DE)**

(54) **DATA PROCESSING METHOD AND RELATED DEVICE**

(57) This application relates to the field of artificial intelligence, and discloses a data processing method. The method includes: obtaining a transformer model including a target network layer and a target module; and processing to-be-processed data by using the transformer model, to obtain a data processing result. The target module is configured to: perform a target operation on a feature map output at the target network layer, to obtain an operation result, and fuse the operation result and the feature map output, to obtain an updated feature map output. In this application, the target module is inserted into the transformer model, and the operation result generated by the target module and an input are fused, so that information carried in a feature map output by the target network layer of the transformer model is increased. In addition, data processing accuracy of the model is improved while a quantity of parameters of the target module and computing power overheads required during an operation are small, that is, the quantity of parameters of the model and the computing power overheads are reduced.

```
┌─────────────────────────────────────────────┐
│ Obtain a transformer model, where the         │──── 601
│ transformer model includes a target network   │
│ layer and a target module                      │
└─────────────────────────────────────────────┘
                      │
                      ▼
┌─────────────────────────────────────────────┐
│ Obtain to-be-processed data, and process the   │──── 602
│ to-be-processed data by using the transformer  │
│ model, to obtain a data processing result,      │
│ where the target module is configured to:       │
│ perform a target operation on a feature map     │
│ output at the target network layer, to obtain   │
│ an operation result, and fuse the operation     │
│ result and the feature map output, to obtain    │
│ an updated feature map output, and the target   │
│ operation is a non-linear operation based on    │
│ convolution                                     │
└─────────────────────────────────────────────┘
```

FIG. 6a

**Description**

This application claims priority to Chinese Patent Application No. 202110611218.0, filed with the China National Intellectual Property Administration on June 1, 2021 and entitled "DATA PROCESSING METHOD AND RELATED DEVICE", which is incorporated herein by reference in its entirety.

**TECHNICAL FIELD**

This application relates to the field of artificial intelligence, and in particular, to a data processing method and a related device.

**BACKGROUND**

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions.

With continuous development of artificial intelligence technologies, a natural language human-machine interaction system that enables human-machine interaction to be performed by using a natural language becomes increasingly important. The human-machine interaction to be performed by using the natural language requires the system to recognize a specific meaning of a human natural language. Usually, the system extracts key information from a natural language sentence to recognize a specific meaning of the sentence.

A transformer structure has a powerful semantic representation capability and can capture a dependency between pieces of long text. Since the transformer structure was proposed, a series of natural language processing tasks represented by translation have significantly surpassed previous models. A pre-trained language model based on the transformer structure has also achieved very good effect in fields such as a question-answering system and a voice assistant.

A transformer model has a plurality of parameters, and has high requirements on calculation and power consumption. Therefore, compression processing such as pruning may usually be performed on the transformer model, to obtain a light-weighted transformer model. However, the compression processing significantly reduces data processing accuracy of the transformer model.

**SUMMARY**

According to a first aspect, this application provides a data processing method. The method includes: obtaining a transformer model, where the transformer model includes a target network layer and a target module.

A terminal device or a cloud-side server may obtain a transformer model for model inference. The transformer model may be a trained transformer model. For example, the transformer model may be a pre-trained model or a model obtained through model fine-tuning. The transformer model may include the target network layer, where the target network layer may be an attention layer or a feed-forward layer at a transformer layer.

The target module may be inserted into the transformer model, to obtain the transformer model in this embodiment of this application.

To-be-processed data is obtained, and the to-be-processed data is processed by using the transformer model, to obtain a data processing result. The target module is configured to: perform a target operation on a feature map output at the target network layer, to obtain an operation result, and fuse the operation result and the feature map output, to obtain an updated feature map output. The target operation is a non-linear operation based on convolution.

In this embodiment of this application, a function of the target module is similar to a function of a ghost module. Usually, most linear operations may be used as operations used in the ghost module. However, in the transformer model, a simple linear operation helps little in improving performance of the model. Therefore, in this embodiment of this application, a non-linear operation is introduced based on a convolution operation.

The feature map output may be understood as a feature map (which may be a final output at the network layer, or may be an intermediate output at the network layer) output by the network layer. For example, the feature map output at the target network layer may be understood as a feature map output by the target network layer.

The to-be-processed data may be text data.

The to-be-processed data may be processed by using the transformer model. The to-be-processed data may be input data in a model inference process, and the transformer model is a model used in the model inference process.

In this embodiment of this application, the target module is inserted into the transformer model, more feature maps (namely, operation results obtained by the target module through the non-linear operation based on convolution) are generated by using the target module, and the operation result and an input of the target module are fused, so that information carried in the feature map output by the target network layer of the transformer model is increased. In addition, data processing accuracy of a target model is improved while a quantity of parameters of the module and computing power overheads required during an operation are small, that is, the quantity of parameters of the model and the computing power overheads are reduced.

In a possible implementation, a weight parameter included in a convolution kernel used for the convolution is obtained through regularization processing. Regularization processing is performed on the weight parameter included in the convolution kernel, so that input and output values of the convolution operation can be as close as possible. Therefore, the model can be more stable in a training process, model performance is robust, and a waste of computing power resources caused by a redundant parameter adjustment process can be reduced. A regularization processing manner may include but is not limited to softmax regularization, L1 regularization, and the like.

In a possible implementation, the convolution kernel for the convolution meets at least one of the following conditions: a difference between a sum of weight parameters included in the convolution kernel and 1 falls within a preset range; and the weight parameter included in the convolution kernel is a positive number. To ensure that the input and output values of the target module are close to each other, regularization processing may be performed on the weight parameter included in the convolution kernel for the convolution operation, so that all weight parameters included in the convolution kernel are positive, and the sum of the weight parameters is 1 or a value close to 1. For example, the difference between the sum of the weight parameters and 1 may be in 0.01, 0.02, 0.03, 0.04, 0.05, 0.06, 0.07, and 0.1.

In a possible implementation, the feature map output and the updated feature map output are consistent in length and width. To fuse (for example, add or concatenate) the operation result (the updated feature map output) obtained through the target operation and the feature map output at the target network layer, the updated feature map output and the feature map output at the target network layer are consistent in length and width.

In a possible implementation, the non-linear operation is used to perform non-linear processing on a result obtained through the convolution, and the non-linear operation may be but is not limited to ReLU.

In a possible implementation, the target network layer includes an attention layer.

In a possible implementation, the attention layer includes M attention heads, and the feature map output at the target network layer includes M feature map outputs of the M attention heads.

The performing a target operation on a feature map output at the target network layer, to obtain an operation result, and fusing the operation result and the feature map output includes:
performing N target operations on the M feature map outputs, to obtain N first feature maps, and fusing the N first feature maps and the M feature map outputs of the M attention heads.

In a possible implementation, the fusing the N first feature maps and the M feature map outputs of the M attention heads includes: performing an addition operation on the N first feature maps and the M feature map outputs of the M attention heads. Because the target module may generate more feature maps by performing a cheap operation, after the addition operation is performed on the N first feature maps and the M feature map outputs of the M attention heads, information carried in a feature map output by the attention layer can be increased. This improves data processing accuracy of the model while a quantity of parameters and computing power costs are small.

In a possible implementation, the attention layer includes M attention heads, each of the M attention heads includes a first branch and a second branch, an output of the first branch is obtained through a point multiplication operation based on a K vector and a Q vector, an output of the second branch is obtained based on a V vector, and the feature map output at the target network layer includes outputs of M first branches of the M attention heads. The performing a target operation on a feature map output at the target network layer, to obtain an operation result, and fusing the operation result and the feature map output includes: performing N target operations on the outputs of the M first branches, to obtain N second feature maps, and fusing the N second feature maps and the outputs of the M first branches.

In a possible implementation, the fusing the N second feature maps and the outputs of the M first branches includes: performing a concatenation (concat) operation on the N second feature maps and the outputs of the M first branches. In this embodiment of this application, the transformer model may be obtained by performing a pruning operation on the attention head. For example, a matrix K and a matrix Q may be pruned to a size of A*M, a matrix V is not pruned, and the matrix V remains to be in a size of A*(M+N). A new matrix with a size of A*N may be generated by using the target module, and point multiplication is performed on the new matrix and N v vectors in the matrix V For outputs of the first branch and the second branch, this is equivalent to that the size of the matrix is consistent with the size of the matrix without pruning, and there is little loss in a data amount. In addition, data processing accuracy of a target model is improved while a quantity of parameters of the module and computing power overheads required during an operation are small, that is, the quantity of parameters of the model and the computing power overheads are reduced.

In a possible implementation, the attention layer includes M attention heads, each of the M attention heads includes a third branch, an output of the third branch is obtained through a point multiplication operation based on a K vector, a Q vector, and a V vector, and the feature map output at the target network layer includes outputs of M third branches of the M attention heads. The performing a target operation on a feature map output at the target network layer, to obtain an operation result, and fusing the operation result and the feature map output includes: performing N target operations on the outputs of the M third branches, to obtain N third feature maps, and fusing the N third feature maps and the outputs of the M third branches, for example, performing a concatenation operation on the N third feature maps and the outputs of the M third branches.

In this embodiment of this application, the transformer model may be obtained by performing a pruning operation on the attention head. For example, a matrix K, a matrix Q, and a matrix V may be pruned from a dimension of M+N to a dimension of M, so that a dimension of the output of the third branch is also M. A new matrix with a dimension of N may be generated by using the target module, and the new matrix and the output of the third branch are concatenated, to obtain a feature map with a dimension of M+N. For the output of the third branch, a dimension of the output of the third branch is consistent with a dimension of the output without pruning, and there is little loss in a data amount. In addition, data processing accuracy of a target model is improved while a quantity of parameters of the module and computing power overheads required during an operation are small, that is, the quantity of parameters of the model and the computing power overheads are reduced.

In a possible implementation, the target network layer includes a feed-forward layer FFN.

In a possible implementation, the FFN includes an intermediate layer, the intermediate layer includes X groups of neurons, and the feature map output at the target network layer includes X feature map outputs of the X groups of neurons. The performing a target operation on a feature map output at the target network layer, to obtain an operation result, and fusing the operation result and the feature map output includes: performing N target operations on the X feature map outputs, to obtain N fourth feature maps, and fusing the N fourth feature maps and the feature map outputs of the X groups of neurons, for example, performing a concatenation operation on the N fourth feature maps and the X feature map outputs of the X groups of neurons.

In this embodiment of this application, the transformer model may be obtained by performing a pruning operation on the intermediate layer in the FFN. For example, the feature map output of the neuron may be pruned from a dimension of M+N to a dimension of M. A new matrix with a dimension of N may be generated by using the target module, and the new matrix and the X feature map outputs are concatenated, to obtain a feature map with a dimension of M+N. For the output at the intermediate layer, a dimension of the output at the intermediate layer is consistent with a dimension of the output without pruning, and there is little loss in a data amount. In addition, data processing accuracy of a target model is improved while a quantity of parameters of the module and computing power overheads required during an operation are small, that is, the quantity of parameters of the model and the computing power overheads are reduced.

In a possible implementation, the FFN includes an intermediate layer and an output layer, the intermediate layer includes X groups of neurons, the output layer is used to process X feature map outputs of the X groups of neurons, to obtain X outputs at the output layer, and the feature map output at the target network layer includes the X outputs at the output layer. The performing a target operation on a feature map output at the target network layer, to obtain an operation result, and updating the feature map output based on operation result includes: performing N target operations on the X outputs at the output layer, to obtain N fifth feature maps, and updating the X outputs at the output layer based on the N fifth feature maps, for example, performing a concatenation operation on the N fifth feature maps and the X outputs at the output layer.

In a possible implementation, after the processing the to-be-processed data by using the transformer model, the method further includes: performing model training on the transformer model based on the data processing result, to obtain a trained transformer model.

In a possible implementation, before the obtaining a transformer model, the method further includes: obtaining a performance requirement, where the performance requirement indicates data processing accuracy of the transformer model and/or a model size of the transformer model; and determining a quantity of target modules and an insertion position of the target module in the transformer model based on the performance requirement.

Specifically, the terminal device may send the performance requirement to the cloud-side server. The performance requirement includes but is not limited to at least one of a precision requirement, a delay requirement, or a model compression ratio requirement. Then, the cloud-side server may obtain the performance requirement.

In this embodiment of this application, the cloud-side server may have an initial neural network model with a transformer structure. After receiving the performance requirement sent by the terminal device, the cloud-side server may determine a pruning size of the transformer model based on the received performance requirement. Specifically, when the performance requirement includes a high precision requirement, it may be determined that the pruning size of the transformer model is large. When the performance requirement includes a high delay requirement, it may be determined that the pruning size of the transformer model is small. When the performance requirement includes a high model compression ratio, it may be determined that the pruning size of the transformer model is large. Specifically, the cloud-side server may determine information about the pruning size of the transformer model based on a preset function relationship, or determine information about the pruning size of the transformer model based on a preset correspondence (for example, in a table lookup manner).

In a possible implementation, higher data processing accuracy indicates a larger quantity of target modules; higher data processing accuracy indicates a shorter distance between an insertion position of the target module in the transformer model and an embedding layer of the transformer model; and/or a larger model size indicates a larger quantity of target modules.

In this embodiment of this application, the cloud-side server may have an initial neural network model with a transformer structure. After receiving the performance requirement sent by the terminal device, the cloud-side server may determine the quantity of target modules and the insertion position of the target module in the transformer model based on the received performance requirement.

In a possible implementation, higher data processing accuracy indicates a larger quantity of target modules; and/or higher data processing accuracy indicates a shorter distance between an insertion position of the target module in the transformer model and an embedding layer of the transformer model.

For example, when the performance requirement includes a high precision requirement, it may be determined that the quantity of target modules is large, or the distance between the insertion position of the target module in the transformer model and the embedding layer of the transformer model is short. When the performance requirement includes a high delay requirement, it may be determined that the quantity of target modules is small.

In a possible implementation, the size of the transformer model may first be determined, and then the quantity of target modules and the insertion position of the target module in the transformer model are further determined based on a quantity of remaining parameters that can be allocated and a performance parameter such as FLOPs.

In a possible implementation, the transformer model is a model obtained through compression processing, and the compression processing may be pruning processing, quantization processing, or the like.

It should be understood that the pruning operation performed on the transformer model is optional. The target module may alternatively be directly used in the transformer model (for example, the transformer model is a pre-trained model or a model obtained through fine-tuning), to obtain better model performance.

In a possible implementation, the processing the to-be-processed data by using the transformer model includes: performing, by using the transformer model, processing corresponding to a target task on the to-be-processed data, where the target task includes: reading comprehension, text translation, paraphrase recognition, named entity recognition, text emotion analysis, natural language inference, text automatic question answering, text intention recognition, text classification, text simplification, or text story generation.

According to a second aspect, this application provides a data processing apparatus. The apparatus includes:

an obtaining module, configured to obtain a transformer model, where the transformer model includes a target network layer and a target module; and
a data processing module, configured to obtain to-be-processed data, and process the to-be-processed data by using the transformer model, to obtain a data processing result, where the target module is configured to: perform a target operation on a feature map output at the target network layer, to obtain an operation result, and fuse the operation result and the feature map output, to obtain an updated feature map output, and the target operation is a non-linear operation based on convolution.

In a possible implementation, a weight parameter included in a convolution kernel used for the convolution is obtained through regularization processing.

In a possible implementation, the convolution kernel used for the convolution meets at least one of the following conditions:

a difference between a sum of weight parameters included in the convolution kernel and 1 falls within a preset range; and
the weight parameter included in the convolution kernel is a positive number.

In a possible implementation, the feature map output and the updated feature map output are consistent in length and width.

In a possible implementation, the non-linear operation is used to perform non-linear processing on a result obtained through the convolution.

In a possible implementation, the target network layer includes an attention layer.

In a possible implementation, the attention layer includes M attention heads, and the feature map output at the target network layer includes M feature map outputs of the M attention heads.

The data processing module is configured to: perform N target operations on the M feature map outputs, to obtain N first feature maps, and fuse the N first feature maps and the M feature map outputs of the M attention heads.

In a possible implementation, the data processing module is configured to perform an addition operation on the N first feature maps and the M feature map outputs of the M attention heads.

In a possible implementation, the attention layer includes M attention heads, each of the M attention heads includes a first branch and a second branch, an output of the first branch is obtained through a point multiplication operation based on a K vector and a Q vector, an output of the second branch is obtained based on a V vector, and the feature map output at the target network layer includes outputs of M first branches of the M attention heads.

The data processing module is configured to: perform N target operations on the outputs of M first branches, to obtain N second feature maps, and fuse the N second feature maps and the outputs of M first branches.

In a possible implementation, the data processing module is configured to perform a concatenation (concat) operation on the N second feature maps and the outputs of M first branches.

In a possible implementation, the attention layer includes M attention heads, each of the M attention heads includes a third branch, an output of the third branch is obtained through a point multiplication operation based on a K vector, a Q vector, and a V vector, and the feature map output at the target network layer includes outputs of M third branches of the M attention heads.

The data processing module is configured to: perform N target operations on the outputs of the M third branches, to obtain N third feature maps, and fuse the N third feature maps and the outputs of the M third branches.

In a possible implementation, the data processing module is configured to perform a concatenation operation on the N third feature maps and the outputs of the M third branches.

In a possible implementation, the target network layer includes a feed-forward layer FFN.

In a possible implementation, the FFN includes an intermediate layer, the intermediate layer includes X groups of neurons, and the feature map output at the target network layer includes X feature map outputs of the X groups of neurons.

The data processing module is configured to: perform N target operations on the X feature map outputs, to obtain N fourth feature maps, and fuse the N fourth feature maps and the feature map outputs of the X groups of neurons.

In a possible implementation, the data processing module is configured to perform a concatenation operation on the N fourth feature maps and the X feature map outputs of the X groups of neurons.

In a possible implementation, the FFN includes an intermediate layer and an output layer, the intermediate layer includes X groups of neurons, the output layer is used to process the X feature map outputs of the X groups of neurons, to obtain X outputs at the output layer, and the feature map output at the target network layer includes the X outputs at the output layer.

The data processing module is configured to: perform N target operations on the X outputs at the output layer, to obtain N fifth feature maps, and fuse the N fifth feature maps and the X outputs at the output layer.

In a possible implementation, the data processing module is configured to perform an addition operation on the N fifth feature maps and the X outputs at the output layer.

In a possible implementation, the apparatus further includes:

a model training module, configured to perform model training on the transformer model based on the data processing result, to obtain a trained transformer model.

In a possible implementation, the obtaining module is configured to: obtain a performance requirement, where the performance requirement indicates data processing accuracy of the transformer model and/or a model size of the transformer model; and

determine a quantity of target modules and an insertion position of the target module in the transformer model based on the performance requirement.

In a possible implementation, higher data processing accuracy indicates a larger quantity of target modules; higher data processing accuracy indicates a shorter distance between an insertion position of the target module in the transformer model and an embedding layer of the transformer model; and/or a larger model size indicates a larger quantity of target modules.

In a possible implementation, the transformer model is a model obtained through compression processing.

In a possible implementation, the processing the to-be-processed data by using the transformer model includes:

performing, by using the transformer model, processing corresponding to a target task on the to-be-processed data, where the target task includes: reading comprehension, text translation, paraphrase recognition, named entity recognition, text emotion analysis, natural language inference, text automatic question answering, text intention recognition, text classification, text simplification, or text story generation.

According to a third aspect, this application provides a data processing method. The method includes:

receiving a performance requirement sent by a device side, where the performance requirement indicates data processing accuracy of a transformer model and/or a model size of the transformer model;
obtaining, based on the performance requirement, a target transformer model that meets the performance requirement, where the target transformer model includes a target network layer and a target module, the target module is configured to: perform a target operation on a feature map output at the target network layer, to obtain an operation result, and fuse the operation result and the feature map output, and the target operation is a non-linear operation based on convolution; and

sending the target transformer model to the device side.

In a possible implementation, the performance requirement includes at least one of the following: a precision requirement of the model, a delay requirement of the model, or a model compression ratio requirement of the model.

In a possible implementation, the obtaining, based on the performance requirement, a target transformer model that meets the performance requirement includes:

obtaining a first transformer model;
determining a quantity M of target modules and an insertion position of the target module in the first transformer model based on the performance requirement; and
obtaining the target transformer model based on the first transformer model, the quantity M of target modules, and the insertion position of the target model.

In a possible implementation, higher data processing accuracy indicates a larger quantity of target modules;

higher data processing accuracy indicates a shorter distance between an insertion position of the target module in the transformer model and an embedding layer of the transformer model; and/or
a larger model size indicates a larger quantity of target modules.

In a possible implementation, the obtaining the target transformer model based on the first transformer model, the quantity of target modules, and the insertion position of the target model includes:

inserting the M target modules into the first transformer model based on the quantity of target modules and the insertion position of the target model, to obtain a second transformer model; and
performing model training on the second transformer model, to obtain the target transformer model.

In a possible implementation, the obtaining a first transformer model includes:

receiving a compression indication, sent by the device side, for an initial transformer model; and
obtaining the initial transformer model, and performing compression processing on the initial transformer model, to obtain the first transformer model.

According to a fourth aspect, this application provides a data processing apparatus. The apparatus includes:

a receiving module, configured to receive a performance requirement sent by a device side, where the performance requirement indicates data processing accuracy of a transformer model and/or a model size of the transformer model;
an obtaining module, configured to obtain, based on the performance requirement, a target transformer model that meets the performance requirement, where the target transformer model includes a target network layer and a target module, the target module is configured to: perform a target operation on a feature map output at the target network layer, to obtain an operation result, and fuse the operation result and the feature map output, and the target operation is a non-linear operation based on convolution; and
a sending module, configured to send the target transformer model to the device side.

In a possible implementation, the performance requirement includes at least one of the following: a precision requirement of the model, a delay requirement of the model, or a model compression ratio requirement of the model.

In a possible implementation, the obtaining module is specifically configured to:

obtain a first transformer model;
determine a quantity M of target modules and an insertion position of the target module in the first transformer model based on the performance requirement; and
obtain the target transformer model based on the first transformer model, the quantity M of target modules, and the insertion position of the target model.

In a possible implementation, higher data processing accuracy indicates a larger quantity of target modules;

higher data processing accuracy indicates a shorter distance between an insertion position of the target module in the transformer model and an embedding layer of the transformer model; and/or
a larger model size indicates a larger quantity of target modules.

In a possible implementation, the obtaining the target transformer model based on the first transformer model, the quantity of target modules, and the insertion position of the target model includes:

inserting the M target modules into the first transformer model based on the quantity of target modules and the insertion position of the target model, to obtain a second transformer model; and
performing model training on the second transformer model, to obtain the target transformer model.

In a possible implementation, the obtaining module is specifically configured to:

receive a compression indication, sent by the device side, for an initial transformer model; and
obtain the initial transformer model, and performing compression processing on the initial transformer model, to obtain the first transformer model.

According to a fifth aspect, an embodiment of this application provides an execution device, including a memory, a processor, and a bus system. The memory is configured to store a program, and the processor is configured to execute the program in the memory, to perform the method in any one of the first aspect and the optional implementations of the first aspect and the method in any one of the third aspect and the optional implementations of the third aspect.

According to a sixth aspect, an embodiment of this application provides a training device, including a memory, a processor, and a bus system. The memory is configured to store a program, and the processor is configured to execute the program in the memory, to perform the method in any one of the first aspect and the optional implementations of the first aspect and the method in any one of the third aspect and the optional implementations of the third aspect.

According to a seventh aspect, an embodiment of this application provides a computer-readable storage medium. The computer-readable storage medium stores a computer program, and when the computer program is run on a computer, the computer is enabled to perform the method in any one of the first aspect and the optional implementations of the first aspect and the method in any one of the third aspect and the optional implementations of the third aspect.

According to an eighth aspect, an embodiment of this application provides a computer program. When the computer program is run on a computer, the computer is enabled to perform the method in any one of the first aspect and the optional implementations of the first aspect and the method in any one of the third aspect and the optional implementations of the third aspect.

According to a ninth aspect, this application provides a chip system. The chip system includes a processor, configured to support an execution device or a training device to implement functions in the foregoing aspects, for example, sending or processing data or information in the foregoing method. In a possible design, the chip system further includes a memory. The memory is configured to store program instructions and data that are necessary for the execution device or the training device. The chip system may include a chip, or may include a chip and another discrete component.

An embodiment of this application provides a data processing method. The method includes: obtaining a transformer model, where the transformer model includes a target network layer and a target module; obtaining to-be-processed data, and processing the to-be-processed data by using the transformer model, to obtain a data processing result, where the target module is configured to: perform a target operation on a feature map output at the target network layer, to obtain an operation result, and fuse the operation result and the feature map output, to obtain an updated feature map output, and the target operation is a non-linear operation based on convolution. In the foregoing manner, the target module is inserted into the transformer model, more feature maps (namely, operation results obtained by the target module through the non-linear operation based on convolution) are generated by using the target module, and the operation result and an input of the target module are fused, so that information carried in the feature map output by the target network layer of the transformer model is increased. In addition, data processing accuracy of a target model is improved while a quantity of parameters of the module and computing power overheads required during an operation are small, that is, the quantity of parameters of the model and the computing power overheads are reduced.

## BRIEF DESCRIPTION OF DRAWINGS

FIG. 1 is a schematic diagram of a structure of an artificial intelligence main framework;

FIG. 2 shows a natural language processing system;

FIG. 3 shows another natural language processing system;

FIG. 4 is a schematic diagram of a device related to natural language processing according to an embodiment of this application;

FIG. 5a is a schematic diagram of an architecture of a transformer layer;

FIG. 5b is a schematic diagram of an application architecture;

FIG. 6a is a schematic diagram of an embodiment of a data processing method according to an embodiment of this application;

FIG. 6b is a schematic diagram of an application architecture according to an embodiment of this application;

FIG. 7 is a schematic diagram of a structure of a neural network model according to an embodiment of this application;

FIG. 8 is a schematic diagram of a structure of a transformer layer;

FIG. 9 is a schematic diagram of an operation of an attention head (head);

FIG. 10 is a schematic diagram of an operation of a target module according to an embodiment of this application;

FIG. 11 is a schematic diagram of a structure of a neural network model according to an embodiment of this application;

FIG. 12 is a schematic diagram of a structure of a neural network model according to an embodiment of this application;

FIG. 13 is a schematic diagram of a structure of a neural network model according to an embodiment of this application;

FIG. 14 is a schematic diagram of a structure of a neural network model according to an embodiment of this application;

FIG. 15 is a schematic diagram of a structure of a neural network model according to an embodiment of this application;

FIG. 16 is a schematic diagram of a structure of a neural network model according to an embodiment of this application;

FIG. 17 is a schematic diagram of a structure of a neural network model according to an embodiment of this application;

FIG. 18 is a schematic diagram of an application architecture according to an embodiment of this application;

FIG. 19 is a schematic diagram of an application architecture according to an embodiment of this application;

FIG. 20a is a schematic diagram of an embodiment of a data processing method according to an embodiment of this application;

FIG. 20b is a schematic diagram of an embodiment of a data processing method according to an embodiment of this application;

FIG. 21 is a schematic diagram of an embodiment of a data processing apparatus according to an embodiment of this application;

FIG. 22 is a schematic diagram of a structure of an execution device according to an embodiment of this application;

FIG. 23 is a schematic diagram of a structure of a training device according to an embodiment of this application; and

FIG. 24 is a schematic diagram of a structure of a chip according to an embodiment of this application.

## DESCRIPTION OF EMBODIMENTS

The following describes embodiments of the present invention with reference to the accompanying drawings in embodiments of the present invention. Terms used in implementations of the present invention are merely intended to explain specific embodiments of the present invention, but not intended to limit the present invention.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, system, product, or device.

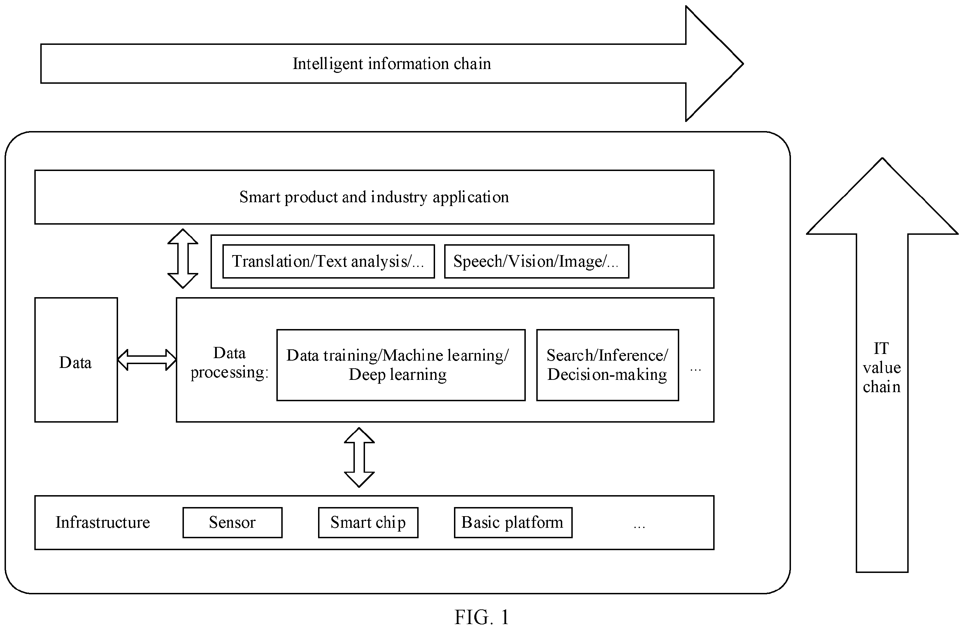

An overall working procedure of an artificial intelligence system is first described with reference to FIG. 1. FIG. 1 is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" indicates a process from data obtaining to data processing. For example, the "intelligent information chain" may be a general process of intelligent information perception, intelligent information representation and formation, intelligent inference, intelligent decision-making, and intelligent execution and output. In this process, data undergoes a refining process of "data-information-knowledge-intelligence". The "IT value chain" is an industrial ecological process from underlying infrastructure of artificial intelligence to information (providing and processing technical implementations) to a system, and indicates value brought by artificial intelligence to the information technology industry.

(1) Infrastructure

The infrastructure provides computing capability support for the artificial intelligence system, implements communication with the external world, and implements support by using a basic platform. The infrastructure communicates with the outside by using sensors. A computing capability is provided by intelligent chips (hardware acceleration chips such as a CPU, an NPU, a GPU, an ASIC, and an FPGA). The basic platforms include related platforms, for example, a distributed computing framework and network, for assurance and support. The basic platforms may include a cloud storage and computing network, an interconnection network, and the like. For example, the sensor communicates with the outside to obtain data, and the data is provided for an intelligent chip in a distributed computing system provided by the basic platform to perform computation.

(2) Data

Data at an upper layer of the infrastructure indicates a data source in the artificial intelligence field. The data relates to graphics, images, speech, and text, and further relates to Internet of things data of conventional devices, and includes service data of a conventional system and perception data such as force, displacement, a liquid level, temperature, and humidity.

(3) Data processing

Data processing usually includes data training, machine learning, deep learning, searching, inference, decision-making, and another method.
The machine learning and the deep learning may be used for performing symbolic and formal intelligent information modeling, extraction, preprocessing, training, and the like on data.
The inference is a process of performing machine thinking and solving problems by simulating an intelligent inference mode of humans in a computer or an intelligent system based on formal information and according to an inference control policy. Typical functions are searching and matching.
The decision-making is a process of performing decision-making after performing inference on intelligent information, and usually provides classification, sorting, prediction, and other functions.

(4) General capabilities

After data processing mentioned above is performed on data, some general capabilities may further be formed based on a data processing result, for example, an algorithm or a general system, such as translation, text analysis, computer vision processing, speech recognition, and picture recognition.

(5) Smart product and industry application

The smart product and industry application are a product and an application of an artificial intelligence system in various fields, and are package of an overall solution of artificial intelligence, so that decision-making for intelligent information is productized and an application is implemented. Application fields mainly include a smart terminal, smart transportation, smart health care, autonomous driving, a smart city, and the like.
This application may be applied to a natural language processing field in the artificial intelligence field. The following describes a plurality of application scenarios in which a plurality of applications are implemented in products.
To facilitate understanding of the solutions in embodiments of this application, the following describes a possible application scenario in embodiments of this application with reference to FIG. 1 to FIG. 3.

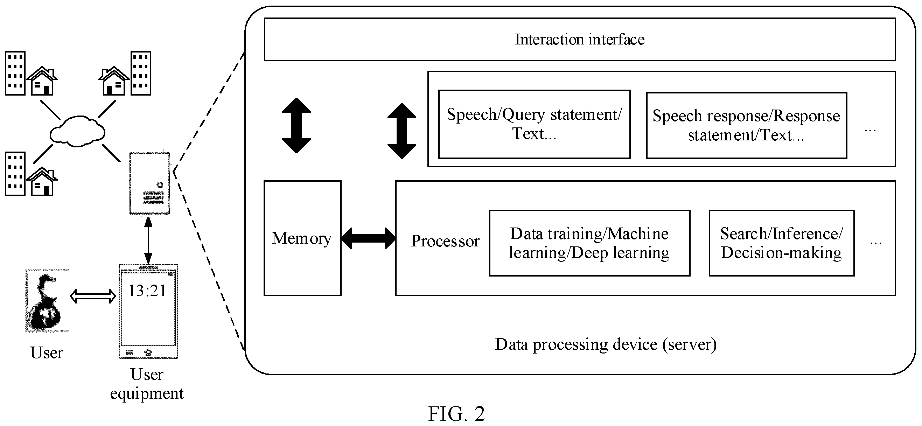

FIG. 2 shows a natural language processing system. The natural language processing system includes user equipment and a data processing device. The user equipment includes a smart terminal such as a mobile phone, a personal computer, or an information processing center. The user equipment is an initiating end of natural language data processing. As an initiator of a request for language question answering, querying, or the like, a user usually initiates the request by using the user equipment.
The data processing device may be a device or server with a data processing function, such as a cloud server, a network server, an application server, or a management server. The data processing device receives, through an interaction interface, a question of a query statement, speech, text, or the like (for example, to-be-processed data in embodiments of this application) from the smart terminal, then performs language data processing by using a memory storing data and a processor processing data in a manner of machine learning, deep learning, searching, inference, decision-making, or the like, and feeds back a processing result (for example, a data processing result in embodiments of this application) to the user equipment. The memory in the data processing device may be a general name, including a local storage and a database storing historical data. The database may be in the data processing device, or may be in another network server.

In the natural language processing system shown in FIG. 2, the user equipment may receive an instruction from the user. For example, the user equipment may receive a piece of text entered by the user, and initiate a request to the data processing device. Then, the data processing device executes a natural language processing application (for example, text classification, text inference, named entity recognition, or translation) on the piece of text obtained by the user equipment, to obtain a processing result (for example, a classification result, an inference result, a named entity recognition result, or a translation result) corresponding to the natural language processing application for the piece of text. For example, the user equipment may receive a piece of Chinese text entered by the user, and initiate a request to the data processing device. Then, the data processing device performs entity classification on the piece of Chinese text, to obtain an entity classification result for the piece of Chinese text. For example, the user equipment may receive a piece of Chinese text entered by the user, and initiate a request to the data processing device. Then, the data processing device translates the piece of Chinese text into English, to obtain an English translation of the piece of Chinese text.

In FIG. 2, the data processing device may perform the data processing method according to embodiments of this application.

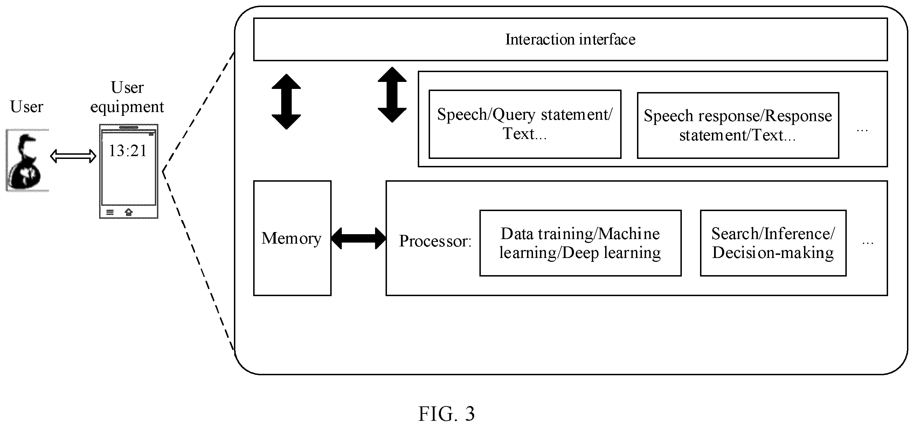

FIG. 3 shows another natural language processing system. In FIG. 3, user equipment is directly used as a data processing device. The user equipment can directly receive an input (for example, to-be-processed data in embodiments of this application) from a user, and the input is directly processed by using hardware of the user equipment. A specific process is similar to that in FIG. 2. For details, refer to the foregoing descriptions. Details are not described herein again.

In the natural language processing system shown in FIG. 3, the user equipment may receive an instruction from the user. For example, the user equipment may receive a piece of text entered by the user, and then the user equipment executes a natural language processing application (for example, text classification, text inference, named entity recognition, or translation) on the piece of text, to obtain a processing result (for example, a classification result, an inference result, a named entity recognition result, or a translation result) corresponding to the natural language processing application for the piece of text. For example, the user equipment may receive a piece of Chinese text entered by the user, and perform entity classification on the piece of Chinese text, to obtain an entity classification result for the piece of Chinese text. For example, the user equipment may receive a piece of Chinese text entered by the user, and translate the piece of Chinese text into English, to obtain an English translation of the piece of Chinese text.

In this embodiment of this application, the user equipment may store a transformer model, and execute an inference task based on the transformer model each time after an operating system (operating system, OS) or an application (application, APP) invokes the model.

In FIG. 3, the user equipment may perform the data processing method according to embodiments of this application.

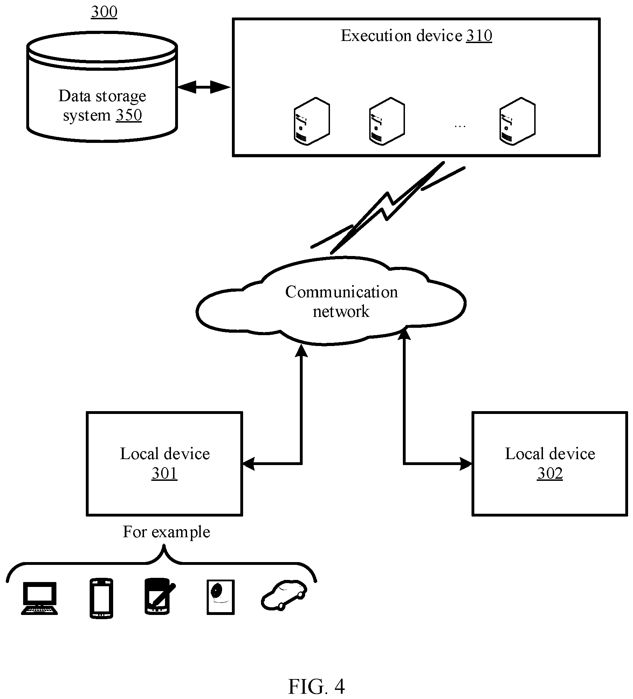

FIG. 4 is a schematic diagram of a device 300 related to natural language processing according to an embodiment of this application.

The user equipment in FIG. 2 and FIG. 3 may specifically be a local device 301 or a local device 302 in FIG. 4. The data processing device in FIG. 2 may specifically be an execution device 310 in FIG. 4. A data storage system 350 may store data to be processed by the execution device 310. The data storage system 350 may be integrated into the execution device 310, or may be disposed on a cloud or another network server.

The processors in FIG. 2 and FIG. 3 may perform data training/machine learning/deep learning by using a neural network model or another model, and execute a natural language processing application (for example, text classification, sequence labeling, reading comprehension, text generation, text inference, or translation) on a text sequence by using a final model that is obtained by performing training or learning with data, to obtain a corresponding processing result.

Because embodiments of this application relate to massive application of a neural network, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

s = 1, 2, ..., or n. n is a natural number greater than 1. Ws is a weight of xs. b is a bias of the neuron. f indicates an activation function (activation function) of the neuron. The activation function is used for introducing a non-linear characteristic into the neural network, to convert an input signal of the neuron into an output signal. The output signal of the activation function may be used as an input at a next convolutional layer, and the activation function may be a sigmoid function. The neural network is a network constituted by connecting a plurality of single neurons together. To be specific, an output of a neuron may be an input to another neuron. An input of each neuron may be connected to a local receptive field of a previous layer to extract a feature of the local receptive field. The local receptive field may be a region including several neurons.

(2) Transformer layer

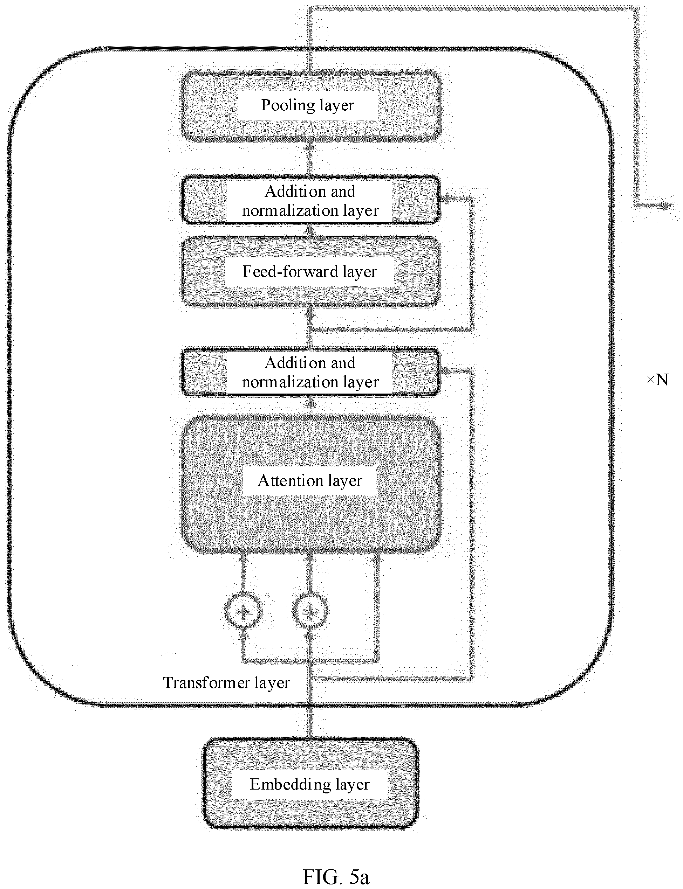

FIG. 5a is a schematic diagram of an architecture of a transformer layer. As shown in FIG. 5a, a neural network includes an embedding layer and at least one transformer layer. The at least one transformer layer may be N transformer layers (N is an integer greater than 0). Each transformer layer includes an attention layer, an addition and normalization (add & norm) layer, a feed-forward (feed-forward) layer, and an addition and normalization layer that are sequentially adjacent to each other. At the embedding layer, embedding processing is performed on a current input, to obtain a plurality of feature vectors. At the attention layer, P input vectors are obtained from a previous layer of the first transformer layer. An intermediate vector corresponding to any first input vector is obtained by using the first input vector in the P input vectors as a center and based on an association degree between each input vector within a preset attention window range and the first input vector. In this way, P intermediate vectors corresponding to the P input vectors are determined. At the pooling layer, the P intermediate vectors are merged into Q output vectors, where a plurality of output vectors obtained from a last transformer layer of the transformer layer are used as feature representations of the current input.

The following describes the foregoing steps in detail with reference to specific examples.

First, at the embedding layer, embedding processing is performed on the current input, to obtain the plurality of feature vectors.

The embedding layer may be referred to as an input embedding (input embedding) layer. The current input may be a text input, for example, a piece of text or a sentence. The text may be Chinese text, or English text, or text in another language. After the current input is obtained, embedding processing may be performed on all words in the current input at the embedding layer, to obtain feature vectors of all the words. In some embodiments, as shown in FIG. 1, the embedding layer includes an input embedding layer and a positional encoding (positional encoding) layer. At the input embedding layer, word embedding processing may be performed on all the words in the current input, to obtain word embedding vectors of all the words. At the positional encoding layer, positions of all the words in the current input may be obtained, to generate position vectors for the positions of all the words. In some examples, the positions of all the words may be absolute positions of all the words in the current input. For example, the current input is "what date should the Huabei debt be repaid", where a position of "what" may be represented as a first position, and a position of "date" may be represented as a second position, .... In some examples, the positions of all the words may be positions of all the words relative to each other. An example in which the current input is "what date should the Huabei debt be repaid" is still used, where a position of "what" may be represented as before "date", and a position of "date" may be represented as after "what", before "should", .... When the word embedding vectors and the position vectors of all the words in the current input are obtained, the position vectors of all the words and the corresponding word embedding vectors may be combined to obtain feature vectors of all the words, namely, the plurality of feature vectors corresponding to the current input. The plurality of feature vectors may be represented as an embedding matrix with a preset dimension. For the plurality of feature vectors, a quantity of the feature vectors may be set to M, and the preset dimension may be a dimension of H. In this case, the plurality of feature vectors may be represented as an M*H embedding matrix.

Second, the P input vectors are obtained from a previous layer of the first transformer layer. The any input vector in the P input vectors is used as the center. The intermediate vector corresponding to the input vector is obtained based on the association degree between each input vector within the preset attention window and the input vector. In this way, the P intermediate vectors corresponding to the P input vectors are determined. The attention layer may also be referred to as a multi-head attention (multi-head attention) layer. In an example, the attention layer may be a fixed window multi-head attention (fixed window multi-head attention) layer.

(3) Attention mechanism (attention mechanism)

The attention mechanism simulates an internal process of an observational behavior of a creature, and is a mechanism that aligns internal experience with external feelings to increase observation precision of some regions. The mechanism can quickly select high-value information from a large amount of information by using limited attention resources. The attention mechanism is widely used in natural language processing tasks, especially machine translation, because the attention mechanism can quickly extract an important feature of sparse data. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula:

$Lx = \|Source\|$ indicates a length of a source. The formula means that constituent elements in the source are assumed to be a series of data pairs. At this time, given an element query in a target, a weight coefficient of each key corresponding to a value is obtained by calculating similarity or a correlation between the query and each key. Then, weighted summation is performed on values, to obtain a final attention value. Therefore, in essence, the attention mechanism is to perform weighted summation on values of the elements in the source, and the query and the key are used to calculate a weight coefficient of a corresponding value. Conceptually, attention may be understood as selecting a small amount of important information from a large amount of information, focusing on the important information, and ignoring most of unimportant information. A process of focusing is reflected in calculation of a weight coefficient. A greater weight indicates that a value corresponding to the weight is more focused. In other words, the weight indicates importance of information, and the value is the information corresponding to the weight. The self-attention mechanism may be understood as an intra attention (intra attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of Target = Source. A specific calculation process of the self-attention mechanism is the same except that a calculation object changes.

(4) Natural language processing (natural language processing, NLP)

Natural language (natural language) is human language, and natural language processing (NLP) is processing of the human language. Natural language processing is a process of systematic analysis, understanding, and information extraction of text data in an intelligent and efficient manner. By using NLP and components of NLP, massive chunks of text data can be organized, or numerous automated tasks can be performed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

For example, there may be the following types of natural language processing tasks.

Sequence labeling: A model needs to provide a classification category for each word in a sentence based on a context. For example, sequence labeling is Chinese word segmentation, part-of-speech tagging, named entity recognition, or semantic role labeling.

Classification task: A classification value is output for an entire sentence. For example, the classification task is text classification.

Sentence relation inference: Two sentences are given, and whether the two sentences have a nominal relation is determined. For example, sentence relation inference is entailment, QA, semantic paraphrasing, or natural language inference.

Generative task: One piece of text is output, and another piece of text is generated. For example, the generative task is machine translation, text summarization, poem writing and sentence making, or picture description.

The following provides some natural language processing examples.

Word segmentation (word segmentation or word breaker, WB): Continuous natural language text is segmented into lexical sequences with semantic plausibility and integrity, to eliminate a cross ambiguity.

Named entity recognition (named entity recognition, NER): Entities (person, place, institution, time, works, and the like) having specific meanings in natural language text are recognized.

Part-of-speech tagging (part-speech tagging): A part of speech (noun, verb, adjective, or the like) is assigned to each word in natural language text. Dependency parsing (dependency parsing): Syntactic elements (subject, predicate, object, attributive, adverbial, complement, and the like) in a sentence are automatically analyzed, to eliminate a structure ambiguity.

Word embedding and semantic similarity (word embedding & semantic similarity): Words are represented in a vectorized manner, and semantic similarity calculation is performed on the words based on the vectorized representation, to resolve a problem of linguistic similarity between the words.

Text semantic similarity (text semantic similarity): Based on massive data in the entire network and a deep neural network technology, calculation of semantic similarity between texts is implemented, to resolve a problem of text semantic similarity.

(5) Ghost module

The existing ghost module may generate more ghost feature maps by using a cheap linear operation, and network performance may be improved by fusing the ghost feature maps. Specifically, a network layer in a neural network first needs to be divided into two parts. An inherent feature map of a first part is given, and the ghost module is configured to generate more feature maps in the feature map of the first part. In comparison with a neural network without a ghost module, a total quantity of parameters required by the ghost module and calculation complexity are reduced without changing a size of an output feature map.

In this embodiment of this application, a target module is integrated into a transformer model. The target module plays a function similar to that of the ghost module, and an insertion position of the target module and an operation used in the target module are adaptively modified and adjusted.

A data processing method provided in embodiments of this application relates to natural language text processing, and may specifically be applied to data processing methods such as data training, machine learning, and deep learning. Symbolized and formalized intelligent information modeling, extraction, preprocessing, training, and the like are performed on training data, to finally obtain a trained transformer model. In addition, in the data processing method provided in embodiments of this application, the trained transformer model may be used, and input data (for example, to-be-processed data) is input into the trained transformer model, to obtain output data (for example, a data processing result). It should be noted that a model training method and the data processing method that are related to the transformer model in embodiments of this application are inventions generated based on a same concept, or may be understood as two parts of a system or two phases of an entire process, for example, a model training phase and a model application phase.

The following describes architectures of the model training phase and the model application phase in embodiments of this application.

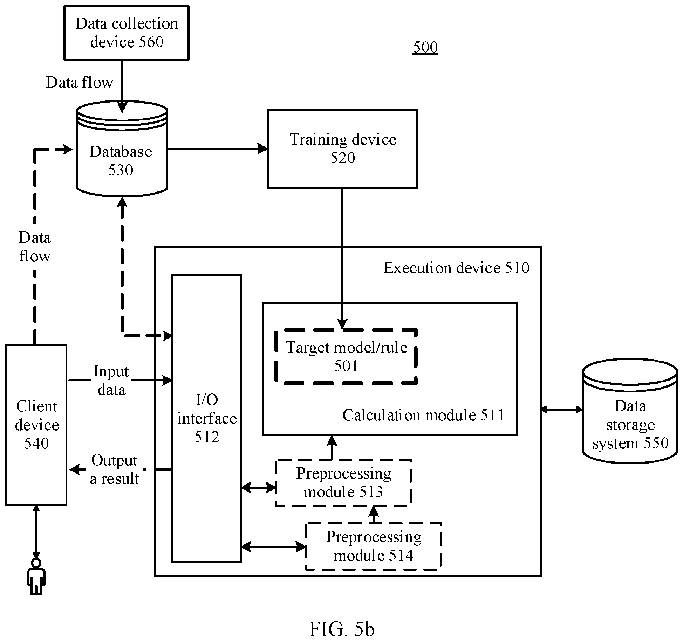

The following describes in detail a system architecture provided in an embodiment of this application with reference to FIG. 5b. FIG. 5b is a schematic diagram of a system architecture according to an embodiment of this application. As shown in FIG. 5b, a system architecture 500 includes an execution device 510, a training device 520, a database 530, a client device 540, a data storage system 550, and a data collection device560.

The execution device 510 includes a computing module 511, an I/O interface 512, a preprocessing module 513, and a preprocessing module 514. The computing module 511 may include a target model/rule 501. The preprocessing module 513 and the preprocessing module 514 are optional.

The data collection device 560 is configured to collect a training sample. The training sample may be image data, text data, audio data, or the like. In this embodiment of this application, the training sample is data (for example, to-be-processed data) used when the transformer model is trained. After collecting training samples, the data collection device 560 stores the training samples in the database 530.

It should be understood that the database 530 may further maintain the transformer model.

The training device 520 may train the transformer model based on the training sample maintained in the database 530, to obtain the target model/rule 501. The target model/rule 501 in this embodiment of this application may specifically be a trained transformer model.

It should be noted that, during actual application, the training sample maintained in the database 530 is not necessarily all collected by the data collection device 560, and may be received from another device. In addition, it should be noted that the training device 520 does not necessarily perform training completely based on the training sample maintained in the database 530 to obtain the target model/rule 501, but may obtain a training sample from a cloud or another place to perform model training. The foregoing descriptions shall not constitute any limitation on this embodiment of this application.

The target model/rule 501 obtained through training by the training device 520 may be used in different systems or devices, for example, the execution device 510 shown in FIG. 5b. The execution device 510 may be a terminal, for example, a mobile phone terminal, a tablet computer, a laptop computer, an augmented reality (augmented reality, AR)/virtual reality (virtual reality, VR) device, or a vehicle-mounted terminal, or may be a server, a cloud, or the like.

Specifically, the training device 520 may transfer the transformer model to the execution device.

In FIG. 5b, the execution device 510 configures the input/output (input/output, I/O) interface 512, configured to exchange data with an external device. A user may input data (for example, to-be-processed data in embodiments of this application) to the I/O interface 512 by using the client device 540.

The preprocessing module 513 and the preprocessing module 514 are configured to perform preprocessing based on the input data received through the I/O interface 512. It should be understood that there may be no preprocessing module 513 or preprocessing module 514, or there is only one preprocessing module. If the preprocessing module 513 and the preprocessing module 514 do not exist, the computing module 511 may be directly configured to process the input data.

In a process in which the execution device 510 preprocesses the input data, or in a process in which the computing module 511 of the execution device 510 performs computing, the execution device 510 may invoke data, code, and the like in the data storage system 550 for corresponding processing, and may further store, in the data storage system 550, data, an instruction, and the like that are obtained through the corresponding processing.

Finally, the I/O interface 512 presents a processing result (for example, a data processing result in embodiments of this application) to the client device 540, to provide the processing result to the user.

In a case shown in FIG. 5b, the user may manually input data and the user may "manually input the data" on an interface provided by the I/O interface 512. In another case, the client device 540 may automatically send input data to the I/O interface 512. If it is required that the client device 540 needs to obtain authorization from the user to automatically send the input data, the user may set corresponding permission on the client device 540. The user may view, on the client device 540, a result output by the execution device 510. Specifically, the result may be presented in a form of displaying, a sound, an action, or the like. The client device 540 may alternatively be used as a data collection end, to collect, as new sample data, input data that is input to the I/O interface 512 and an output result that is output from the I/O interface 512 that are shown in the figure, and store the new sample data in the database 530. It is clear that the client device 540 may alternatively not perform collection. Instead, the I/O interface 512 directly stores, in the database 530 as new sample data, the input data that is input to the I/O interface 512 and the output result that is output from the I/O interface 512 in the figure.

It should be noted that FIG. 5b is merely a schematic diagram of the system architecture according to an embodiment of this application. A position relationship between a device, a component, a module, and the like shown in the figure constitutes no limitation. For example, in FIG. 5b, the data storage system 550 is an external memory relative to the execution device 510. In another case, the data storage system 550 may alternatively be disposed in the execution device 510. It should be understood that the execution device 510 may be deployed in the client device 540.

From a perspective of model inference, in this embodiment of this application, the computing module 511 of the execution device 520 may obtain code stored in the data storage system 550, to implement the data processing method in embodiments of this application.

In this embodiment of this application, the computing module 511 of the execution device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of the hardware circuits. For example, the training device 520 may be a hardware system with an instruction execution function, for example, a CPU or a DSP, a hardware system without an instruction execution function, for example, an ASIC or an FPGA, or a combination of the hardware system without an instruction execution function and the hardware system with an instruction execution function.

Specifically, the computing module 511 of the execution device 520 may be a hardware system with an instruction execution function. The data processing method provided in embodiments of this application may be software code stored in a memory. The computing module 511 of the execution device 520 may obtain the software code from the memory, and execute the obtained software code to implement the data processing method provided in embodiments of this application.

It should be understood that the computing module 511 of the execution device 520 may be a combination of a hardware system without an instruction execution function and a hardware system with an instruction execution function. Some steps of the data processing method provided in embodiments of this application may alternatively be implemented by using the hardware system without an instruction execution function in the computing module 511 of the execution device 520. This is not limited herein.

From a perspective of model training, in this embodiment of this application, the training device 520 may obtain the code stored in the memory (which is not shown in FIG. 5b, and may be integrated into the training device 520 or separately deployed from the training device 520), to implement the data processing method in embodiments of this application.

In this embodiment of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of the hardware circuits. For example, the training device 520 may be a hardware system with an instruction execution function, for example, a CPU or a DSP, a hardware system without an instruction execution function, for example, an ASIC or an FPGA, or a combination of the hardware system without an instruction execution function and the hardware system with an instruction execution function.

Specifically, the training device 520 may be a hardware system with an instruction execution function. The data processing method provided in embodiments of this application may be software code stored in a memory. The training device 520 may obtain the software code from the memory, and execute the obtained software code to implement the data processing method provided in embodiments of this application.

It should be understood that the training device 520 may be a combination of a hardware system without an instruction execution function and a hardware system with an instruction execution function. Some steps of the data processing method provided in embodiments of this application may alternatively be implemented by using the hardware system without an instruction execution function in the training device 520. This is not limited herein.

The data processing method provided in embodiments of this application is first described by using the model inference phase as an example.

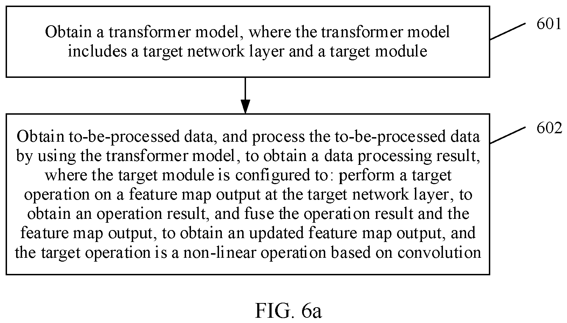

FIG. 6a is a schematic diagram of an embodiment of a data processing method according to an embodiment of this application. The data processing method provided in this embodiment of this application may be applied to an execution device. The execution device may be a terminal device, for example, a mobile phone, a tablet computer, a notebook computer, an intelligent wearable device, or a cloud-side server. As shown in FIG. 6a, the data processing method provided in this embodiment of this application includes the following steps.

601: Obtain a transformer model, where the transformer model includes a target network layer and a target module.

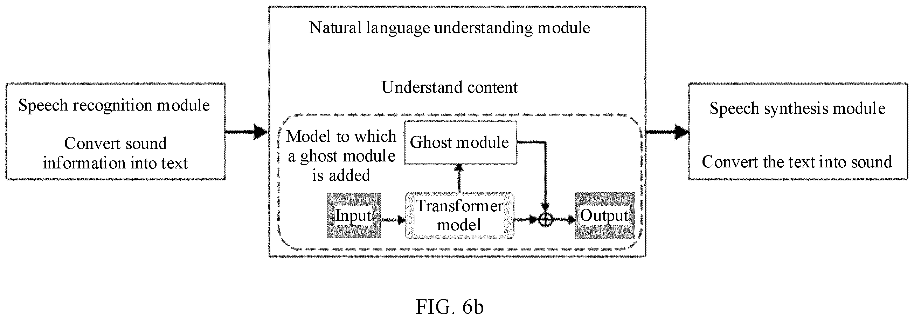

Refer to FIG. 6b. In this embodiment of this application, the transformer model may be obtained based on a service provided at a cloud side.

In this embodiment of this application, a terminal device or a cloud-side server may obtain a transformer model for model inference. The transformer model may be a trained transformer model. For example, the transformer model may be a pre-trained model or a model obtained through model fine-tuning.

The following describes a general structure of the transformer model.

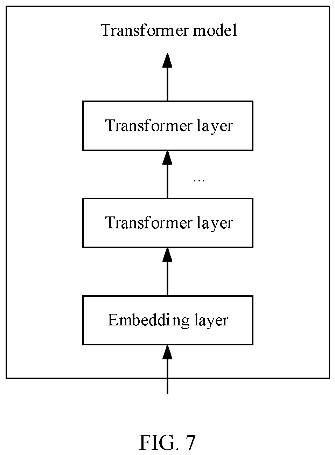

FIG. 7 is a schematic diagram of a structure of a transformer model according to an embodiment of this application. The transformer model may include an embedding layer and a plurality of transformer layers that are sequentially connected. It should be understood that the structure in FIG. 7 is merely an example, and a quantity of transformer layers may be set as required. For example, only one transformer layer may be set, or more transformer layers may be set.

The following describes a specific working process at each layer in the transformer model.

1. Embedding layer

At the embedding layer, embedding processing is performed on an input, to obtain a plurality of feature vectors. A core feature of the transformer model is a unique attention mechanism used by the transformer model. During processing of a natural language, for example, a sentence, the transformer model uses the attention mechanism to assign different attention coefficients to word vectors in the sentence. Therefore, impact of a context on words in the sentence is considered more comprehensively. At the embedding layer, N embedding vectors $X_1$ are obtained based on a node feature and positional encoding of each node in a current sequence. An attention layer is connected to the embedding layer. The N embedding vectors are obtained from the embedding layer and used as input vectors; the input vectors are aggregated based on an association degree between the N input vectors, to obtain N output vectors; and the N output vectors are output to a following transformer layer. At the transformer layer, an output at a previous layer is obtained and used as an input vector, and an operation similar to an operation at the previous transformer layer is performed.

(2) Transformer layer

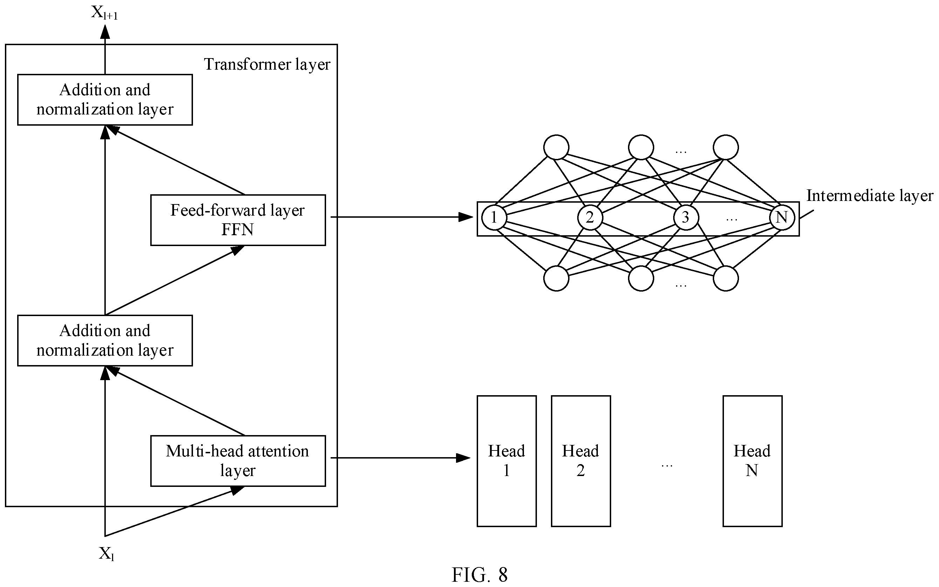

FIG. 8 is a schematic diagram of a structure of a transformer layer. As shown in FIG. 8, the transformer layer may include a multi-head attention layer (which is also referred to as an attention layer), an addition and normalization (add & norm) layer, a feed-forward layer (feed-forward net, FFN), and an addition and normalization layer that are adjacent in sequence.

At the multi-head attention layer, N input vectors $X_1$ are obtained from a previous layer of the multi-head attention layer, and the N input vectors $X_1$ may also be represented as a matrix X. The multi-head attention layer uses an attention mechanism to transform each vector based on an association degree between vectors, to obtain N output vectors, and the N output vectors may also be represented as a matrix Y It may be understood that, when the multi-head attention layer is a layer directly connected to an embedding layer, for example, the transformer layer directly connected to the embedding layer in FIG. 7, an input vector obtained by the multi-head attention layer is an embedding vector that is output by the embedding layer. When the multi-head attention layer is a multi-head attention layer included in a following transformer layer, for example, a multi-head attention layer included in a transformer layer directly connected to a previous transformer layer in FIG. 7, an input vector obtained by the multi-head attention layer is an output vector of a previous transformer layer. The multi-head attention layer may include a plurality of attention heads (for example, a head 1, a head 2, ..., and a head N shown in FIG. 8).

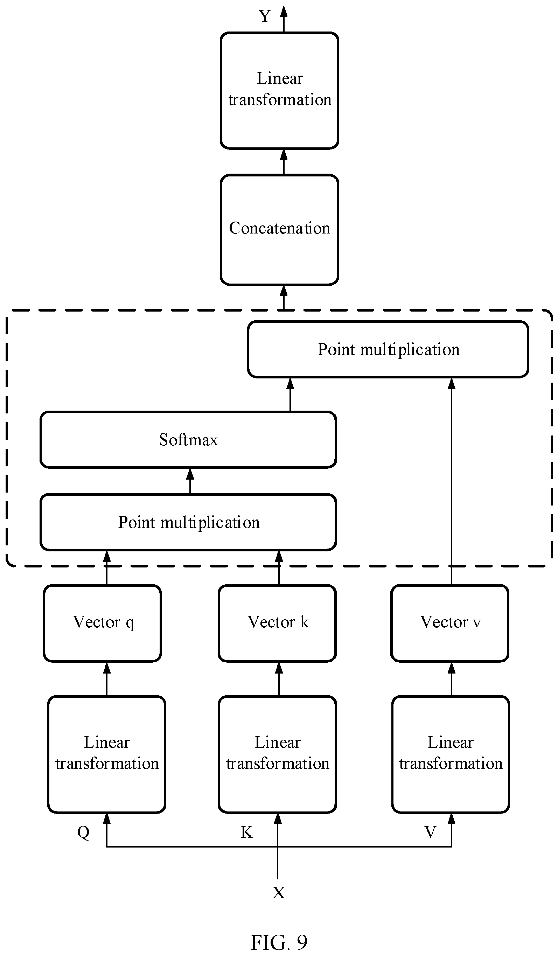

FIG. 9 is a schematic diagram of an operation of an attention head. The schematic diagram shows how the attention head transforms an input matrix X into an output matrix Y As shown in FIG. 9, the attention head transforms each input vector $X_i$ in N input vectors $<X_1, X_2, ..., X_N>$ by using a first transformation matrix Q, a second transformation matrix K, and a third transformation matrix V separately, to obtain a first intermediate vector (a vector q), a second intermediate vector (a vector k), and a third intermediate vector (a vector v) that correspond to each input vector.

During the operation, linear transformation may be performed, by using the first transformation matrix Q, the second transformation matrix K, and the third transformation matrix V separately, on the input matrix X including the N input vectors, to obtain a matrix Q, a matrix K, and a matrix V of the input matrix; and then the matrices are separately decomposed, to obtain the vector q, the vector k, and the vector v that correspond to each input vector.

It should be understood that, an operation bypass in which linear transformation is performed, by using the third transformation matrix V, on the input matrix X including the N input vectors, to obtain the matrix V is located may also be referred to as a second bypass in this embodiment of this application.

For any $i^{th}$ input vector $X_i$ in the N input vectors, an association degree between the $i^{th}$ input vector $X_i$ and each input vector $X_j$ is determined based on a point multiplication operation of a first intermediate vector (a vector q, $q_i$) corresponding to the $i^{th}$ input vector and a second intermediate vector (a vector k, $k_j$) corresponding to each input vector $X_j$. A point multiplication result of $q_i$ and $k_j$ may be directly determined as the association degree. However, more typically, the point multiplication result is first divided by a constant, then a softmax operation is performed, and an operation result is used as the association degree between the input vectors $X_i$ and $X_j$, as shown in the following formula:

$$\alpha_{i,j} = softmax\left(\frac{q_i \cdot k_j}{\sqrt{d_k}}\right)$$

It should be understood that an operation bypass in which a point multiplication operation is performed on the first intermediate vector (a q vector, $q_i$) and the second intermediate vector (a k vector, $k_j$) may also be referred to as a first bypass in this embodiment of this application.

Then, an association degree $\alpha_{i,j}$ between the $i^{th}$ input vector $X_i$ and each input vector $X_j$ may be used as a weight factor, and weighted combination is performed on a third intermediate vector (a vector v, $v_j$) corresponding to each input vector $X_j$, to obtain an $i^{th}$ combined vector $C_i$ corresponding to the $i^{th}$ input vector $X_i$, as shown in the following formula:

$$C_i = \sum_{j=1}^{N} \alpha_{i,j} v_j$$

Then, a vector sequence <Ci, $C_2$, ..., $C_N$> or a matrix C of N combined vectors corresponding to the N input vectors may be obtained. N output vectors may be obtained based on the sequence of the combined vectors. Specifically, in an embodiment, the vector sequence of the N combined vectors may be directly used as the N output vectors, that is, $Y_i = C_i$. In this case, an output matrix Y is the combined vector matrix C, which may also be written as:

$$Y = softmax\left(\frac{QK^T}{\sqrt{d_k}}\right)V$$

The foregoing is a description of a processing procedure of an attention head head. In an MHA architecture, the MHA layer maintains m sets of transformation matrices, and each set of transformation matrices includes a first transformation matrix Q, a second transformation matrix K, and a third transformation matrix V Therefore, the foregoing operations may be performed in parallel, to obtain m combined vector sequences (namely, m matrices C). Each vector sequence includes N combined vectors obtained based on one set of transformation matrices. In this case, at the MHA layer, a concatenation (concat) operation is performed on the obtained m combined vector sequences, to obtain a concatenated matrix; and then the concatenated matrix is transformed by using a fourth transformation matrix W, to obtain the final output matrix Y Corresponding N output vectors <$Y_1$, $Y_2$, ..., $Y_N$> are obtained by decomposing the output matrix Y. In the foregoing operation process, at the MHA layer, a transformation operation is performed based on an association degree between the N input vectors, to obtain the N output vectors.

In this embodiment of this application, the transformer model may include the target network layer. The target network layer may be an attention layer or a feed-forward layer in the transformer layer.

In a possible implementation, the target module may be located behind the target network layer, or may be embedded into the target network layer and located behind an output at an intermediate layer in the target network layer. There may be one or more target modules. This is not limited herein.

In a possible implementation, the transformer model may be configured to implement a target task. The target task may include but is not limited to: reading comprehension, text translation, paraphrase recognition, named entity recognition, text emotion analysis, natural language inference, text automatic question answering, text intention recognition, text classification, text simplification, or text story generation.

602: Obtain to-be-processed data, and process the to-be-processed data by using the transformer model, to obtain a data processing result, where the target module is configured to: perform a target operation on a feature map output at the target network layer, to obtain an operation result, and fuse the operation result and the feature map output, to obtain an updated feature map output, and the target operation is a non-linear operation based on convolution.

In this embodiment of this application, the to-be-processed data is obtained. The to-be-processed data may be text data, and may be processed by using the transformer model. The to-be-processed data may be input data in a model inference process, and the transformer model is a model used in the model inference process.

In this embodiment of this application, the target module may perform the target operation on the feature map output at the target network layer, to obtain the operation result. The feature map output may be a final output or an intermediate feature map output at the target network layer.

The following describes the target operation.

Usually, most linear operations may be used as operations used in the target module. However, in the transformer model, a simple linear operation helps little in improving performance of the model. Therefore, in this embodiment of this application, a non-linear operation is introduced based on a convolution operation.

For the convolution operation, the convolution operation in this embodiment of this application may be but is not limited to a one-dimensional convolution operation, a two-dimensional convolution operation, or a depthwise separable convolution operation.

One-dimensional convolution (Conv1D) is locally dependent in encoding in a sequence direction and has excellent performance for an NLP task. For one-dimensional convolution, if a convolution operation (Conv1D_S) is performed in the sequence direction, input and output channels are d, and a dimension of a convolution kernel is $W \in R^{d \times d \times k}$. After Conv1D_S is applied, an output of an $i^{th}$ token and a $c^{th}$ channel may be represented as:

$$O_{i,c} = \text{Conv1D\_S}(\mathbf{X}, \mathbf{W}_{c,:,:}, i, c)$$
$$= \sum_{j=1}^{d} \sum_{m=1}^{k} W_{c,j,k} \cdot X_{i-\lceil \frac{k+1}{2} \rceil + m, j}$$

Similarly, if one-dimensional convolution (Conv1D_F) is performed in a feature direction, the input and output channels are n, and the dimension of the convolution kernel is $W \in R^{n \times n \times k}$. After Conv1D_F is applied, the output of the $i^{th}$ token and the $c^{th}$ channel may be represented as:

$$O_{i,c} = \text{Conv1D\_F}(\mathbf{X}, \mathbf{W}_{i,:,:}, i, c)$$
$$= \sum_{j=1}^{n} \sum_{m=1}^{k} W_{i,j,m} \cdot X_{j,c-\lceil \frac{k+1}{2} \rceil + m}$$

For two-dimensional convolution (Conv2D), input and output channels are 1, and a dimension of a convolution kernel is $W \in R^{1 \times 1 \times k \times k}$. After Conv2D is applied, the output of the $i^{th}$ token and the $c^{th}$ channel may be represented as:

$$O_{i,c} = \text{Conv2D}(\mathbf{X}, \mathbf{W}, i, c)$$
$$= \sum_{w=1}^{k} \sum_{h=1}^{k} W_{:,:,h,w} \cdot X_{i-\lceil \frac{k+1}{2} \rceil + h, c - \lceil \frac{k+1}{2} \rceil + w}.$$

Although one-dimensional convolution (Conv1D_S) has strong expressive power, a large amount of additional memory and calculation is required. Compared with Conv1D, depthwise separable convolution (DWConv) is used to perform convolution independently on each channel, to reduce a quantity of parameters from $d^2 k$ to $dk$. $W \in R^{d \times k}$ indicates a weight of the DWConv operation. After DWConv is applied, the output of the $i^{th}$ token and the $c^{th}$ channel may be represented as:

$$O_{i,c} = \text{DWConv}(\mathbf{X}_{:,c}, \mathbf{W}_{c,:}, i, c)$$
$$= \sum_{m=1}^{k} W_{c,m} \cdot X_{i-\lceil \frac{k+1}{2} \rceil + m, c}$$

For the non-linear operation based on convolution, in a possible implementation, to ensure that input and output values of the target module are close to each other, regularization processing may be performed on a weight parameter included in the convolution kernel for the convolution operation in the target module, so that all weight parameters included in the convolution kernel are positive, and a sum of the weight parameters is 1 or a value close to 1. For example, a difference between the sum of the weight parameters and 1 may be in 0.01, 0.02, 0.03, 0.04, 0.05, 0.06, 0.07, and 0.1.

In a possible implementation, a regularization processing manner may include but is not limited to softmax regularization, L1 regularization, and the like.

Regularization processing is performed on the weight parameter included in the convolution kernel, so that input and output values of the convolution operation can be as close as possible. Therefore, the model can be more stable in a training process, model performance is robust, and a waste of computing power resources caused by a redundant parameter adjustment process can be reduced.

In a possible implementation, the feature map output and the updated feature map output are consistent in length and width. To fuse (for example, add or concatenate) the operation result (the updated feature map output) obtained through the target operation and the feature map output at the target network layer, the updated feature map output and the feature map output at the target network layer are consistent in length and width.

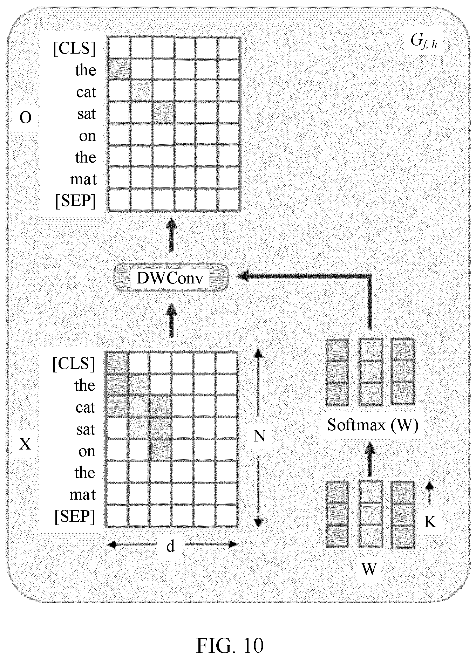

For example, the convolution operation is depthwise separable convolution, and the regularization manner is softmax regularization. FIG. 10 is a schematic diagram of an operation of the target module based on depthwise separable convolution. Softmax regularization is applied to the convolution kernel, to ensure that the input and output values of the target module are close to each other.

In a possible implementation, the non-linear operation is used to perform non-linear processing on a result obtained through the convolution, and the non-linear operation may be but is not limited to ReLU.

The following describes the target network layer, namely, the insertion position of the target module in the transformer model.

In a possible implementation, the target network layer may include an attention layer.

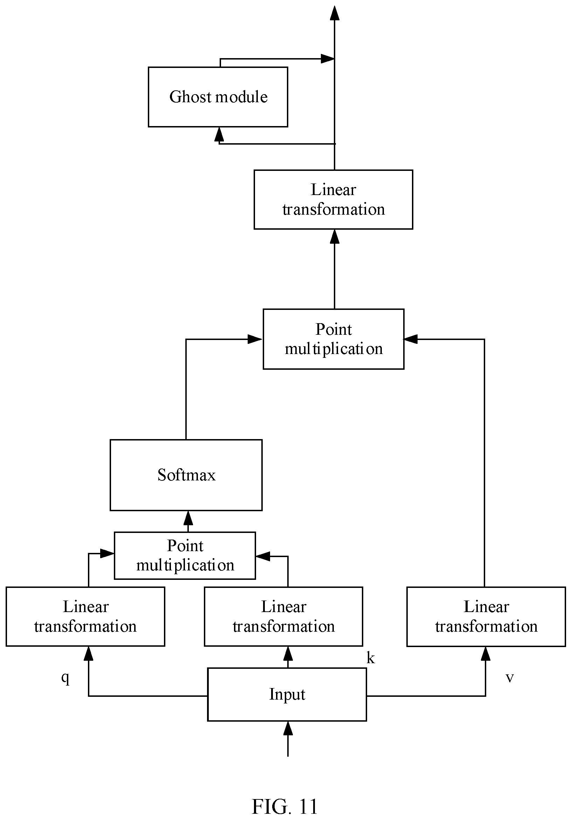

Refer to FIG. 11. The insertion position of the target module in the transformer model may be after an output of the attention head. Specifically, the attention layer in the transformer model may include M attention heads, where M is a positive integer. The feature map output at the target network layer may include M feature map outputs of the M attention heads. The target module may perform N target operations on the M feature map outputs, to obtain N first feature maps, and update the M feature map outputs of the M attention heads based on the N first feature maps.

The target module uses different convolution kernels for each target operation each time the target module performs the N target operations. In other words, the target module may include N submodules, and each submodule includes one convolution kernel. Further, an input of the target module may be each of the M attention heads. In other words, the M feature map outputs of the M attention heads are input to the target module, the target module may perform N target operations on the M feature map outputs, and one first feature map may be obtained in each target operation.

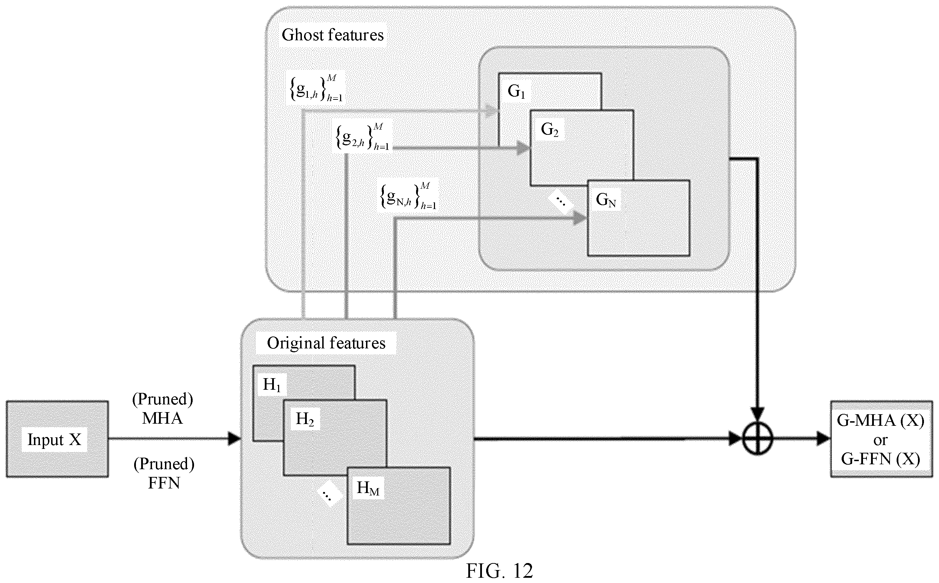

For example, refer to FIG. 12. The N target operations may be performed on the M feature map outputs (H1, H2, ..., HM) of the M attention heads in FIG. 12, to obtain the N first feature maps (G1, G2, ..., GM). Specifically, if one transformer layer in the transformer model has $N_H$ attention heads, outputs of a plurality of attention heads may be represented as a sum of outputs of the $N_H$ attention heads:

$$MHA(\boldsymbol{X}) = \sum_{h=0}^{N_H} \boldsymbol{H}_h(\boldsymbol{X})$$

It is assumed that the transformer layer includes M attention heads, and the target module may be configured to generate N ghost features (which may also be referred to as first feature maps in this embodiment) based on the M attention heads. A formula for calculating an fth ghost feature may be represented as:

$$G_f(\boldsymbol{X}) = Nonlinear(\sum_{h=0}^{M} g_{f,h}(\boldsymbol{H}_h(\boldsymbol{X})))$$

Nonlinear is a non-linear operation, for example, ReLU.

In a possible implementation, the M feature map outputs of the M attention heads may be updated based on the N first feature maps, for example, an addition operation may be performed on the N first feature maps and the M feature map outputs of the M attention heads.

In this embodiment of this application, because the target module may generate more feature maps by performing a cheap operation, after the addition operation is performed on the N first feature maps and the M feature map outputs of the M attention heads, information carried in a feature map output by the attention layer can be increased. This improves data processing accuracy of the model while a quantity of parameters and computing power costs are small.

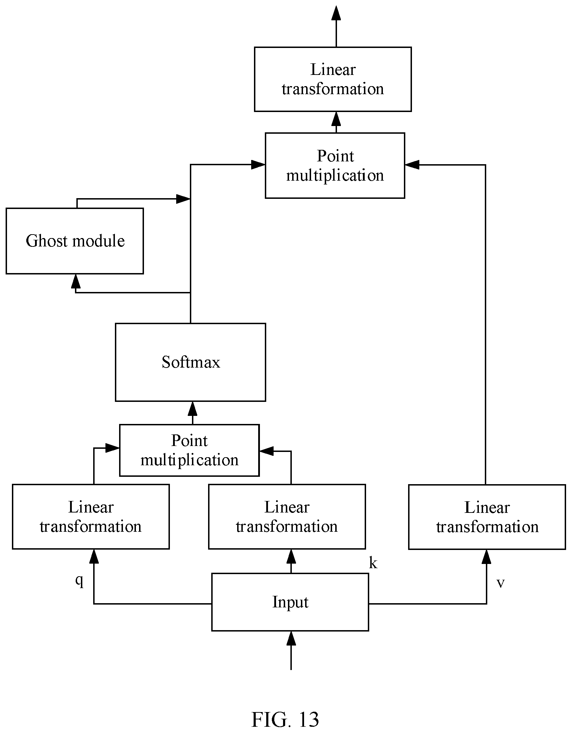

Refer to FIG. 13. The insertion position of the target module in the transformer model may be after the intermediate output of the attention head. The insertion position of the target module in the transformer model may be located at a position, in the attention head, obtained through softmax processing after point multiplication is performed on a k vector and a q vector. Specifically, the attention layer includes M attention heads, each of the M attention heads includes a first branch and a second branch, an output of the first branch is obtained through a point multiplication operation based on a K vector and a Q vector, an output of the second branch is obtained based on a V vector, and the feature map output at the target network layer includes outputs of M first branches of the M attention heads. Further, N target operations may be performed on the outputs of the M first branches, to obtain N second feature maps, and the outputs of the M first branches are updated based on the N second feature maps, for example, a concatenation (concat) operation is performed on the N second feature maps and the outputs of the M first branches.

In this embodiment of this application, the transformer model may be obtained by performing a pruning operation on the attention head. For example, a matrix K and a matrix Q may be pruned to a size of A*M, a matrix V is not pruned, and the matrix V remains to be in a size of A*(M+N). A new matrix with a size of A*N may be generated by using the target module, and point multiplication is performed on the new matrix and N v vectors in the matrix V For outputs of the first branch and the second branch, this is equivalent to that the size of the matrix is consistent with the size of the matrix without pruning, and there is little loss in a data amount. In addition, data processing accuracy of a target model is improved while a quantity of parameters of the module and computing power overheads required during an operation are small, that is, the quantity of parameters of the model and the computing power overheads are reduced.

In a possible implementation, the attention layer includes M attention heads, each of the M attention heads includes a third branch, an output of the third branch is obtained through a point multiplication operation based on a K vector, a Q vector, and a V vector, and the feature map output at the target network layer includes outputs of M third branches of the M attention heads.

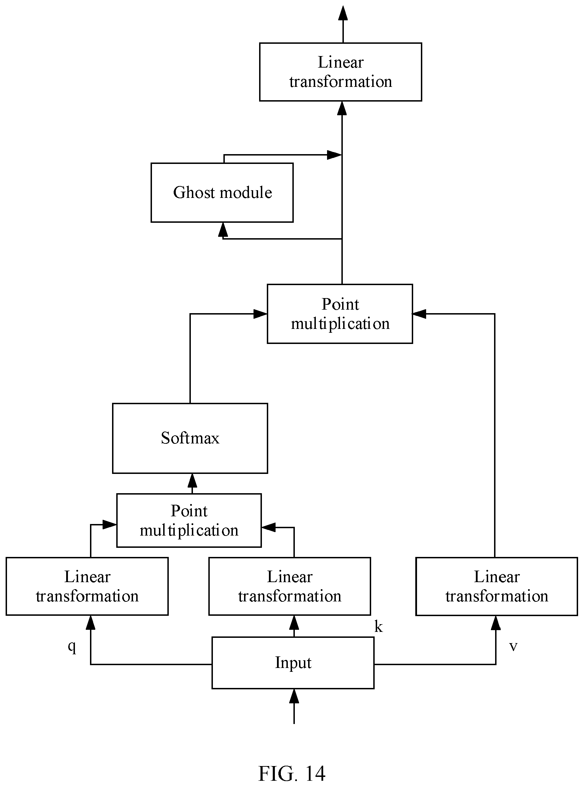

Refer to FIG. 14. The insertion position of the target module in the transformer model may be after an intermediate output of the attention head. Specifically, the insertion position of the target module in the transformer model may be located at a position (the output of the third branch), in the attention head, obtained through point multiplication performed on a k vector, a q vector, and a v vector. Specifically, N target operations may be performed on the outputs of the M third branches, to obtain N first feature maps, and the N third feature maps and the outputs of the M third branches are fused. For example, a concatenation operation may be performed on the N third feature maps and the outputs of the M third branches.

In this embodiment of this application, the transformer model may be obtained by performing a pruning operation on the attention head. For example, a matrix K, a matrix Q, and a matrix V may be pruned from a dimension of M+N to a dimension of M, so that a dimension of the output of the third branch is also M. A new matrix with a dimension of N may be generated by using the target module, and the new matrix and the output of the third branch are concatenated, to obtain a feature map with a dimension of M+N. For the output of the third branch, a dimension of the output of the third branch is consistent with a dimension of the output without pruning, and there is little loss in a data amount. In addition, data processing accuracy of a target model is improved while a quantity of parameters of the module and computing power overheads required during an operation are small, that is, the quantity of parameters of the model and the computing power overheads are reduced.

In a possible implementation, the target network layer may include a feed-forward layer FFN.

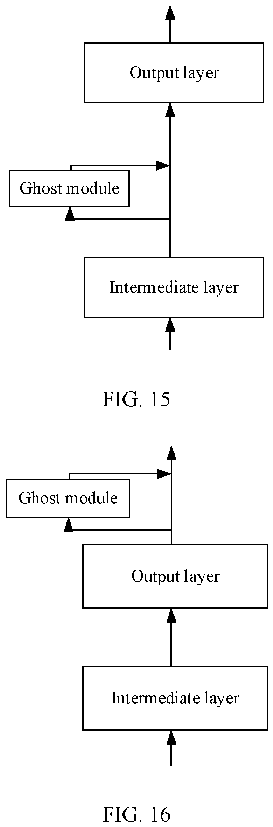

Refer to FIG. 15. The insertion position of the target module in the transformer model may be after an intermediate output at the FFN. Specifically, in a possible implementation, the FFN includes an intermediate layer, the intermediate layer includes X groups of neurons, and the feature map output at the target network layer includes X feature map outputs of the X groups of neurons. In other words, the insertion position of the target module in the transformer model may be after the intermediate layer in the FFN and before an output layer in the FFN.

In a possible implementation, N target operations may be performed on the X feature map outputs, to obtain N fourth feature maps, and the N fourth feature maps and the feature map outputs of the X groups of neurons are fused. For example, a concatenation operation may be performed on the N fourth feature maps and the X feature map outputs of the X groups of neurons.

In this embodiment of this application, the transformer model may be obtained by performing a pruning operation on the intermediate layer in the FFN. For example, the output feature map of the neuron may be pruned from a dimension of M+N to a dimension of M. A new matrix with a dimension of N may be generated by using the target module, and the new matrix and the X feature map outputs are concatenated, to obtain a feature map with a dimension of M+N. For the output at the intermediate layer, a dimension of the output at the intermediate layer is consistent with a dimension of the output without pruning, and there is little loss in a data amount. In addition, data processing accuracy of a target model is improved while a quantity of parameters of the module and computing power overheads required during an operation are small, that is, the quantity of parameters of the model and the computing power overheads are reduced.

Refer to FIG. 16. The insertion position of the target module in the transformer model may be after a final output at the FFN. Specifically, in a possible implementation, the FFN includes an intermediate layer and an output layer, the intermediate layer includes X groups of neurons, the output layer is used to process the X feature map outputs of the X groups of neurons, to obtain X outputs at the output layer, and the feature map output at the target network layer includes the X outputs at the output layer. In other words, the insertion position of the target module in the transformer model may be after the output layer in the FFN.

In a possible implementation, N target operations may be performed on the X outputs at the output layer, to obtain N fifth feature maps, and the N fifth feature maps and the X outputs at the output layer are fused. For example, an addition operation may be performed on the N fifth feature maps and the X outputs at the output layer.

In this embodiment of this application, because the target module may generate more feature maps by performing a cheap operation, after the addition operation is performed on the N fifth feature maps and the X outputs at the output layer, information carried in a feature map output by the FFN can be increased. This improves data processing accuracy of the model while a quantity of parameters and computing power costs are small.

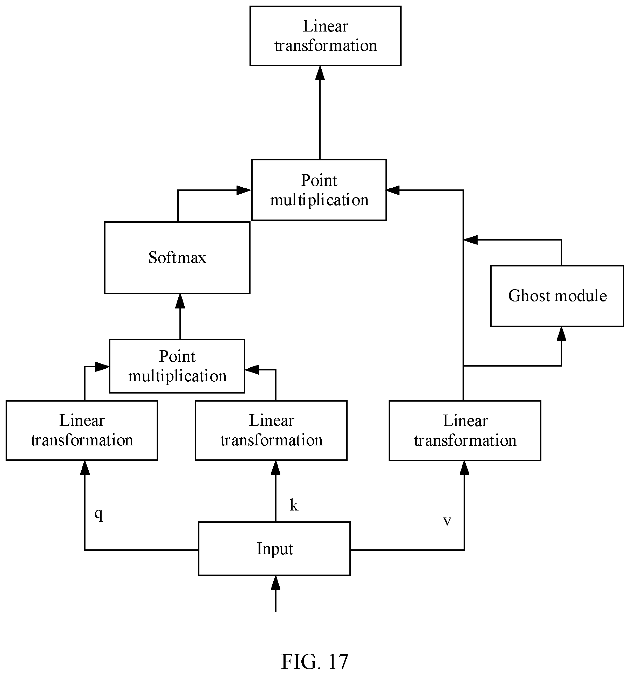

In a possible implementation, the target module may further be inserted into another position in the transformer model. For example, after linear transformation is performed on the first transformation matrix K, the target module may be inserted into a position before point multiplication is performed on the vector k and the vector q. For example, after linear transformation is performed on the second transformation matrix Q, the target module may be inserted into a position before point multiplication is performed on the vector k and the vector q. For example, the target module may be inserted into a position after point multiplication is performed on the vector k and the vector q and before softmax is performed. For example, after linear transformation is performed on the third transformation matrix V, the target module may be inserted into a position before point multiplication is performed on the vector v (as shown in FIG. 17).

In this embodiment of this application, the target module is inserted into the transformer model, more feature maps (namely, operation results obtained by the target module through the non-linear operation based on convolution) are generated by using the target module, and the operation result and an input of the target module are fused, so that information carried in the feature map output by the target network layer of the transformer model is increased. In addition, data processing accuracy of a target model is improved while a quantity of parameters of the module and computing power overheads required during an operation are small, that is, the quantity of parameters of the model and the computing power overheads are reduced.

As shown in Table 1, the added target module is applied to a compressed or original transformer model such as BERT, RoBERTa, and ELECTRA, to significantly improve data processing accuracy of the model without adding additional parameters and calculation.

**Table 1**

| Model | FLOPs(G) | #params(M) | MNLI | QNLI | QQP | RTE | SST-2 | MRPC | CoLA | STS-B | Avg. |
|---|---|---|---|---|---|---|---|---|---|---|---|
| BERT-basc (Devlin et al., 2019) | 22.5 | 110 | 84.6 | 90.5 | 89.2 | 66.4 | 93.5 | 84.8 | 52.1 | 85.8 | 80.9 |
| RoBERTa-base (Liu et al., 2019) | 22.5 | 125 | 86.0 | 92.5 | 88.7 | 73.0 | 94.6 | 86.5 | 50.5 | 88.1 | 82.5 |
| ELECTRA-small (Clark et al., 2020) | 1.7 | 14 | 79.7 | 87.7 | 88.0 | 60.8 | 89.1 | 83.7 | 54.6 | 80.3 | 78.0 |
| Tiny BERT$_6$ (Jiao et. al., 2020) | 113 | 67 | 84.6 | 90.4 | 89.1 | 70.0 | 93.1 | 87.3 | 51.1 | 83.7 | 81.2 |
| TinyBERT$_4$ (Jiao et al., 2020) | 1.2 | 15 | 82.5 | 87.7 | 89.2 | 66.6 | 92.6 | 86.4 | 44.1 | 80.4 | 78.7 |
| ConvBERT-medium (Jiang et al., 2020) | 4.7 | 17 | 82.1 | 88.7 | 88.4 | 65.3 | 89.2 | 84.6 | 56.4 | 82.9 | 79.7 |
| ConvBERT-small (Jiang et al., 2020) | 2.0 | 14 | 81.5 | 88.5 | 88.0 | 62.2 | 89.2 | 83.3 | 54.8 | 83.4 | 78.9 |
| MobileBERT w/o OPT (Sun et al., 2020) | 5.7 | 25 | 84.3 | 91.6 | 88.3 | 70.4 | 92.6 | 84.5 | 51.1 | 84.8 | 81.0 |
| MobileBERT (Sun et al., 2020) | 5.7 | 25 | 83.3 | 90.6 | - | 66.2 | 92.8 | - | 50.5 | 84.4 | - |
| MobileBERT-tiny (Sun et al., 2020) | 3.1 | 15 | 81.5 | 89.5 | - | 65.1 | 91.7 | - | 46.7 | 80.1 | - |
| GhostBERT ($m$ = 12/12) | 22.5 | 110 | 84.6 | 91.1 | 89.3 | 70.2 | 93.1 | 86.9 | 54.6 | 83.8 | 81.7 |
| GhostBERT ($m$ = 9/12) | 16.9 | 88 | 84.9 | 91.0 | 88.6 | 69.2 | 92.9 | 86.1 | 53.7 | 84.0 | 81.3 |
| GhostBERT ($m$ = 6/12) | 11.3 | 67 | 84.2 | 90.88 | 89.1 | 69.6 | 93.1 | 84.0 | 53.4 | 83.1 | 80.9 |
| GhostBERT ($m$ = 3/12) | 5.8 | 46 | 83.8 | 90.7 | 89 | 68.6 | 93.2 | 82.5 | 51.3 | 82.5 | 80.2 |
| GhostBERT ($m$ = 1/12) | 2.0 | 32 | 82.5 | 89.3 | 88.7 | 65.0 | 92,9 | 81.0 | 41.3 | 80.0 | 77.6 |
| GhostRoBERTa ($m$ = 12/12) | 22.5 | 125 | 87.9 | 93.0 | 89.6 | 74.6 | 95.1 | 88.0 | 52.4 | 88.3 | 83.6 |
| GhostRoBERTa ($m$ = 9/12) | 16.9 | 103 | 87.7 | 92.6 | 89.5 | 73.0 | 94.5 | 85.7 | 51.9 | 87.1 | 82.8 |
| GhostRoBERTa ($m$ = 6/12) | 11.3 | 82 | 86.3 | 92.1 | 89.5 | 71.5 | 94.5 | 86.8 | 51.2 | 87.0 | 82.4 |
| GhostRoBERTa ($m$ = 3/12) | 5.8 | 61 | 85.5 | 91.2 | 89.1 | 68.5 | 93.4 | 85.3 | 48.9 | 84.7 | 80.8 |
| GhostRoBERTa ($m$ = 1/12) | 2.0 | 47 | 81.3 | 88.6 | 88.5 | 62.8 | 92.1 | 82.8 | 39.7 | 81.8 | 77.2 |
| GhostELECTRA-small ($m$ = 4/4) | 1.7 | 14 | 82.3 | 88.3 | 88.5 | 64.7 | 91.9 | 88.4 | 55.8 | 83.5 | 80.4 |

An embodiment of this application provides a data processing method. The method includes: obtaining a transformer model, where the transformer model includes a target network layer and a target module; obtaining to-be-processed data, and processing the to-be-processed data by using the transformer model, to obtain a data processing result, where the target module is configured to: perform a target operation on a feature map output at the target network layer, to obtain an operation result, and fuse the operation result and the feature map output, to obtain an updated feature map output, and the target operation is a non-linear operation based on convolution. In the foregoing manner, the target module is inserted into the transformer model, more feature maps (namely, operation results obtained by the target module through the non-linear operation based on convolution) are generated by using the target module, and the operation result and an input of the target module are fused, so that information carried in the feature map output by the target network layer of the transformer model is increased. In addition, data processing accuracy of a target model is improved while a quantity of parameters of the module and computing power overheads required during an operation are small, that is, the quantity of parameters of the model and the computing power overheads are reduced.

The data processing method provided in embodiments of this application is first described by using a model training phase as an example.

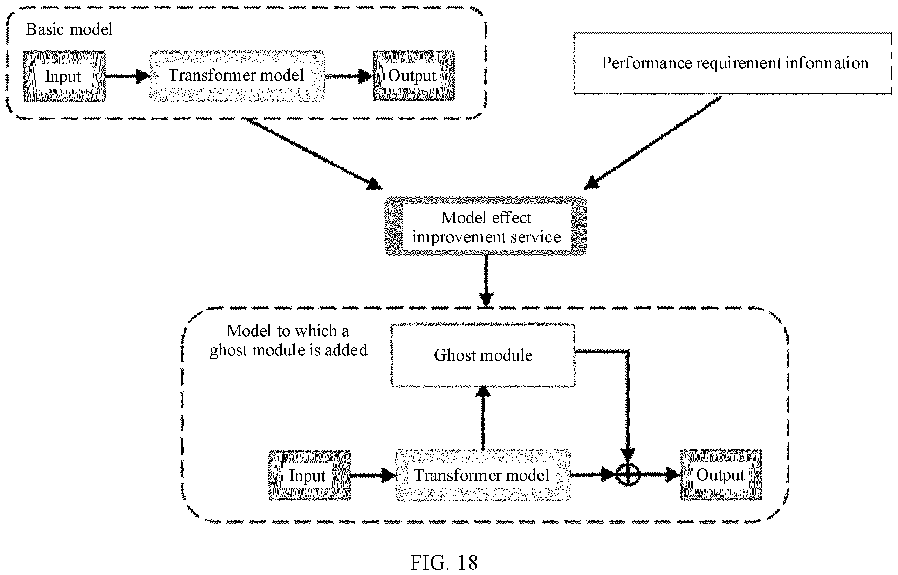

FIG. 18 is a schematic diagram of an application architecture according to an embodiment of this application. A target module may be configured to help a user improve effect of a given basic model of the user, to provide a new model that meets hardware constraint. As shown in FIG. 18, the user may input a performance requirement, for example, calculation amount constraint, of a required model. A cloud-side server may calculate, based on the performance requirement, a quantity of target modules that can be added and an insertion position, and output a new model that meets a user requirement.

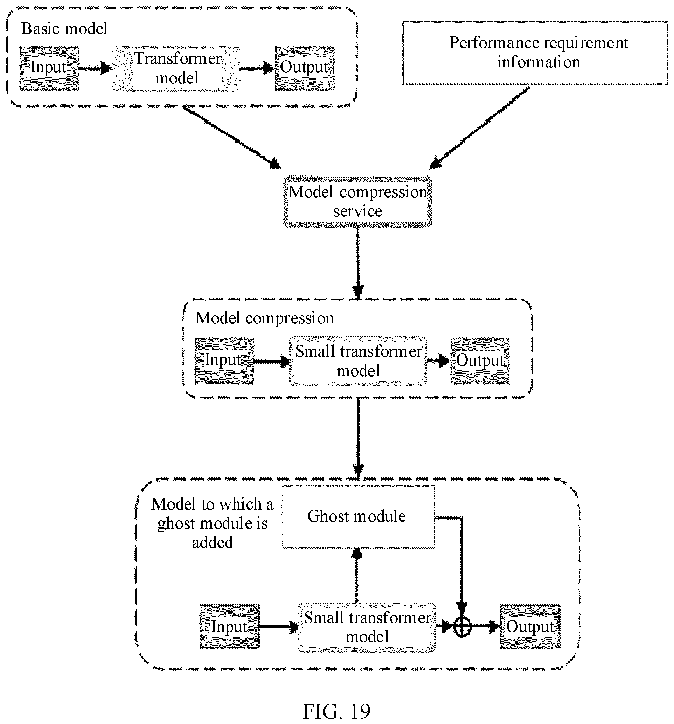

FIG. 19 is a schematic diagram of an application architecture according to an embodiment of this application. A target module provided in the present invention may cooperate with another model compression method (pruning, quantization, or the like) to provide a cloud service of model compression. As shown in FIG. 19, a cloud-side server may compress (pruning, quantization, or the like) a basic model based on a performance requirement at a device side, select an appropriate quantity of target modules to be inserted into an appropriate position in a compressed model, and return a module to the device side.

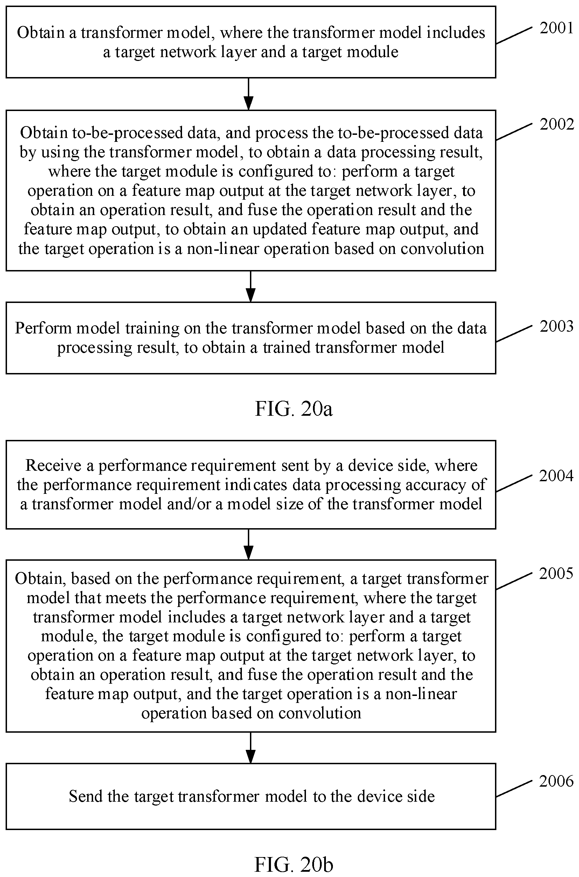

FIG. 20a is a schematic diagram of an embodiment of a data processing method according to an embodiment of this application. The data processing method provided in this embodiment of this application may be applied to a cloud-side server. As shown in FIG. 20a, the data processing method provided in this embodiment of this application includes the following steps.

2001: Obtain a transformer model, where the transformer model includes a target network layer and a target module.

In this embodiment of this application, the cloud-side server may obtain the transformer model for model training. The transformer model may be a pre-trained model or a model obtained through model fine-tuning. The transformer model may be a model obtained through pruning processing. For example, the transformer model may be a model obtained after pruning processing is performed on an attention head at an attention layer. The transformer model may alternatively be a model obtained after pruning processing is performed on a neuron at an intermediate layer in an FFN.

In a possible implementation, a performance requirement may be obtained, where the performance requirement indicates data processing accuracy and/or a model size of the transformer model. A quantity of target modules and an insertion position of the target module in the transformer model are determined based on the performance requirement.

The following describes how to obtain the performance requirement.

In this embodiment of this application, a terminal device may send the performance requirement of the terminal device to the cloud-side device.

Specifically, the terminal device may send the performance requirement to the cloud-side server. The performance requirement includes but is not limited to at least one of a precision requirement, a delay requirement, or a model compression ratio requirement. Then, the cloud-side server may obtain the performance requirement.

In this embodiment of this application, after receiving the performance requirement sent by the terminal device, the cloud-side server may compress an initial transformer model based on the received performance requirement, for example, perform pruning processing or quantization.

Pruning processing is used as an example.

In this embodiment of this application, the cloud-side server may obtain an initial neural network model with a transformer structure. After receiving the performance requirement sent by the terminal device, the cloud-side server may determine a pruning size of the transformer model based on the received performance requirement. Specifically, when the performance requirement includes a high precision requirement, it may be determined that the pruning size of the transformer model is large. When the performance requirement includes a high delay requirement, it may be determined that the pruning size of the transformer model is small. When the performance requirement includes a high model compression ratio, it may be determined that the pruning size of the transformer model is large. Specifically, the cloud-side server may determine information about the pruning size of the transformer model based on a preset function relationship, or determine information about the pruning size of the transformer model based on a preset correspondence (for example, in a table lookup manner).

In a possible implementation, the information about the size may include a width size and a depth size of the transformer model. Specifically, the information about the width size may include a quantity of attention heads included in each transformer layer of the transformer model and a quantity of neurons included in the intermediate layer in the feed-forward layer, and the information about the depth size may include a quantity of transformer layers included in the transformer model.

In this embodiment of this application, calculation in a multi-head attention mechanism may be split into calculation of each attention head, and then calculation results are added. Therefore, a pruning operation at an MHA layer may be performed based on the quantity of attention heads. A quantity of neurons included in an intermediate layer (intermediate layer) of a fully-connected network (the feed-forward layer) is changed, so that the intermediate layer (intermediate layer) of the fully-connected network (the feed-forward layer) is also scalable. For a transformer layer, a pruning operation may be performed on a width based on an attention head at the MHA layer and a neuron at the intermediate layer in the feed-forward layer. For example, if a BERT base model has 12 attention heads, there may be 12 options for scaling a corresponding width size, that is, the width may be any one of 1, 2, ..., and 12. Similarly, any quantity of neurons may also be retained at an intermediate layer in a feed-forward layer.

In this embodiment of this application, the cloud-side server may have an initial neural network model with a transformer structure. After receiving the performance requirement sent by the terminal device, the cloud-side server may determine the quantity of target modules and the insertion position of the target module in the transformer model based on the received performance requirement.

In a possible implementation, higher data processing accuracy indicates a larger quantity of target modules; higher data processing accuracy indicates a shorter distance between an insertion position of the target module in the transformer model and an embedding layer of the transformer model; and/or a larger model size indicates a larger quantity of target modules.

For example, when the performance requirement includes a high precision requirement, it may be determined that the quantity of target modules is large, or the distance between the insertion position of the target module in the transformer model and the embedding layer of the transformer model is short. When the performance requirement includes a high delay requirement, it may be determined that the quantity of target modules is small.

It should be understood that when the distance between the target module and the embedding layer is long, a value of the distance has small impact on improvement of model performance.

In a possible implementation, the size of the transformer model may first be determined, and then the quantity of target modules and the insertion position of the target module in the transformer model are further determined based on a quantity of remaining parameters that can be allocated and a performance parameter such as

FLOPs.

It should be understood that the pruning operation performed on the transformer model is optional. The target module may alternatively be directly used in the transformer model (for example, the transformer model is a pre-trained model or a model obtained through fine-tuning), to obtain better model performance.

2002: Obtain to-be-processed data, and process the to-be-processed data by using the transformer model, to obtain a data processing result, where the target module is configured to: perform a target operation on a feature map output at the target network layer, to obtain an operation result, and fuse the operation result and the feature map output, to obtain an updated feature map output, and the target operation is a non-linear operation based on convolution.

Step 2002 is a feed-forward process during model training. For details, refer to descriptions of step 602. Details are not described herein again.

2003: Perform model training on the transformer model based on the data processing result, to obtain a trained transformer model.

After the data processing result is obtained, a loss may be constructed based on the data processing result, and model training may be performed on the transformer model based on the loss, to obtain the trained transformer model.

In a possible implementation, the model training process may be knowledge distillation. Specifically, a model with good model precision may be used as a teacher model, the transformer model to which the target module is added is used as a student model, and knowledge learned by an original large model (the teacher model) is migrated, by using a knowledge distillation method, to a model (the student model) to which the target module (after pruning) is added. An objective function may include a plurality of distillation objectives, for example, enabling logits, a word vector state, and a hidden state of the student model to approach logits, a word vector state, and a hidden state of the teacher model.

In a possible implementation, after the trained transformer model is obtained, fine-tuning may be performed on the trained transformer model. Specifically, fine-tuning may be performed on the trained transformer model based on a true label of a downstream task.

After obtaining the trained transformer model, the cloud-side server may return the trained transformer model to user equipment, so that the user equipment may perform inference by using the model (the trained transformer model) returned by the cloud side. For an inference process, refer to descriptions of step 601 and step 602 in the foregoing embodiment. Details are not described herein again.

FIG. 20b is a schematic diagram of a data processing method according to an embodiment of this application. As shown in FIG. 20b, the method includes the following steps.

2004: Receive a performance requirement sent by a device side, where the performance requirement indicates data processing accuracy of a transformer model and/or a model size of the transformer model.

In this embodiment of this application, a cloud-side server, as a service on a cloud side, may receive the performance requirement sent by the device side. The performance requirement may indicate the data processing accuracy and/or the model size of the transformer model, and include at least one of the precision requirement, the delay requirement, or the model compression ratio requirement.

In a possible implementation, the cloud-side server may obtain a first transformer model, and insert a target module into the first transformer model, to obtain a target transformer model.

The first transformer model may be a to-be-trained model specified by the device side, or a to-be-trained model selected by the cloud-side server.

In a possible implementation, the cloud-side server may receive a compression instruction that is for an initial transformer model and that is sent by the device side, obtain the initial transformer model, and perform compression processing on the initial transformer model, to obtain the first transformer model. The initial transformer model may be a to-be-trained model specified by the device side, or a to-be-trained model selected by the cloud-side server.

In other words, the first transformer model may be a compressed model or an uncompressed model (for example, the first transformer model is a pre-trained model or a model obtained through fine-tuning).

2005: Obtain, based on the performance requirement, a target transformer model that meets the performance requirement, where the target transformer model includes a target network layer and a target module, the target module is configured to: perform a target operation on a feature map output at the target network layer, to obtain an operation result, and fuse the operation result and the feature map output, and the target operation is a non-linear operation based on convolution.

In this embodiment of this application, the cloud-side server may obtain, based on the performance requirement, the target transformer model that meets the performance requirement. In this embodiment of this application, after receiving the performance requirement sent by the terminal device, the cloud-side server may determine a quantity of target modules and an insertion position of the target module in the transformer model (for example, the first transformer model in the foregoing embodiment) based on the received performance requirement.

In a possible implementation, higher data processing accuracy indicates a larger quantity of target modules; higher data processing accuracy indicates a shorter distance between the insertion position of the target module in the transformer model and an embedding layer of the transformer model; and/or a larger model size indicates a larger quantity of target modules.

For example, when the performance requirement includes a high precision requirement, it may be determined that the quantity of target modules is large, or the distance between the insertion position of the target module in the transformer model and the embedding layer of the transformer model is short. When the performance requirement includes a high delay requirement, it may be determined that the quantity of target modules is small.

It should be understood that when the distance between the target module and the embedding layer is long, a value of the distance has small impact on improvement of model performance.

In a possible implementation, the size of the transformer model may first be determined, and then the quantity of target modules and the insertion position of the target module in the transformer model are further determined based on a quantity of remaining parameters that can be allocated and a performance parameter such as FLOPs.

Further, the cloud-side server may obtain the target transformer model based on the first transformer model, the quantity M of target modules, and the insertion position of the target module. Specifically, the M target modules may be inserted into the first transformer model based on the quantity of the target modules and the insertion position of the target module, to obtain a second transformer model, and model training may be performed on the second transformer model, to obtain the target transformer model. The model training may be knowledge distillation. Specifically, a model with good model precision may be used as a teacher model, the transformer model to which the target module is added is used as a student model, and knowledge learned by an original large model (the teacher model) is migrated, by using a knowledge distillation method, to a model (the student model) to which the target module (after pruning) is added. An objective function may include a plurality of distillation objectives, for example, enabling logits, a word vector state, and a hidden state of the student model to approach logits, a word vector state, and a hidden state of the teacher model.

For descriptions of the target module, refer to descriptions related to the target module in step 602 in the foregoing embodiment. Details are not described herein again.

2006: Send the target transformer model to the device side.

After obtaining the target transformer model, the cloud-side server may return the target transformer model to user equipment, so that the user equipment may perform inference by using the model (the target transformer model) returned by the cloud side. For an inference process, refer to descriptions of step 601 and step 602 in the foregoing embodiment. Details are not described herein again.

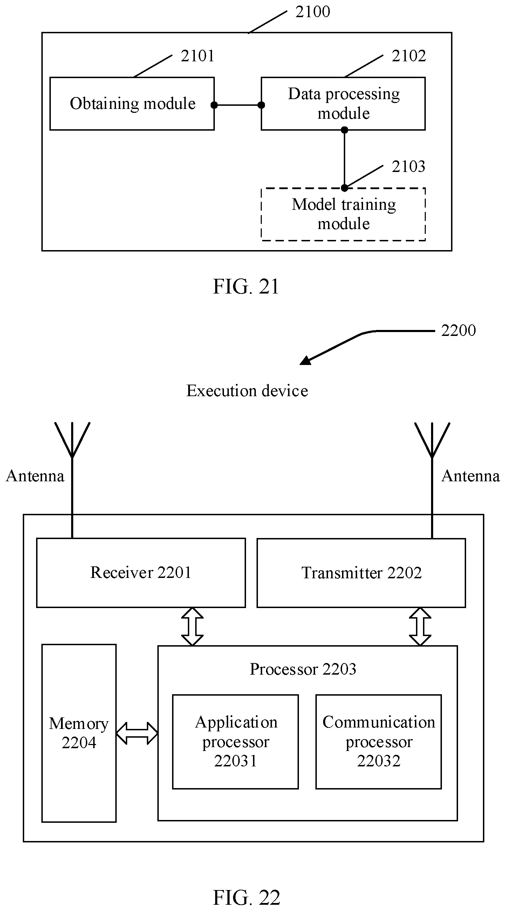

FIG. 21 is a schematic diagram of a structure of a data processing apparatus according to an embodiment of this application. The apparatus 2100 includes:

an obtaining module 2101, configured to obtain a transformer model, where the transformer model includes a target network layer and a target module, where
for specific descriptions of the obtaining module 2101, refer to descriptions in step 601 or step 2001, and details are not described herein again; and
a data processing module 2102, configured to obtain to-be-processed data, and process the to-be-processed data by using the transformer model, to obtain a data processing result, where the target module is configured to: perform a target operation on a feature map output at the target network layer, to obtain an operation result, and fuse the operation result and the feature map output, to obtain an updated feature map output, and the target operation is a non-linear operation based on convolution.

For specific descriptions of the data processing module 2102, refer to descriptions in step 602 and step 2002. Details are not described herein again.

In a possible implementation, a weight parameter included in a convolution kernel used for the convolution is obtained through regularization processing.

In a possible implementation, the convolution kernel used for the convolution meets at least one of the following conditions:

a difference between a sum of weight parameters included in the convolution kernel and 1 falls within a preset range; and
the weight parameter included in the convolution kernel is a positive number.

In a possible implementation, the feature map output and the updated feature map output are consistent in length and width.

In a possible implementation, the non-linear operation is used to perform non-linear processing on a result obtained through the convolution.

In a possible implementation, the target network layer includes an attention layer.

In a possible implementation, the attention layer includes M attention heads, and the feature map output at the target network layer includes M feature map outputs of the M attention heads.

The data processing module is configured to: perform N target operations on the M feature map outputs, to obtain N first feature maps, and fuse the N first feature maps and the M feature map outputs of the M attention heads.

In a possible implementation, the data processing module is configured to perform an addition operation on the N first feature maps and the M feature map outputs of the M attention heads.

In a possible implementation, the attention layer includes M attention heads, each of the M attention heads includes a first branch and a second branch, an output of the first branch is obtained through a point multiplication operation based on a K vector and a Q vector, an output of the second branch is obtained based on a V vector, and the feature map output at the target network layer includes outputs of M first branches of the M attention heads.

The data processing module is configured to: perform N target operations on the outputs of M first branches, to obtain N second feature maps, and fuse the N second feature maps and the outputs of M first branches.

In a possible implementation, the data processing module is configured to perform a concatenation (concat) operation on the N second feature maps and the outputs of M first branches.

In a possible implementation, the attention layer includes M attention heads, each of the M attention heads includes a third branch, an output of the third branch is obtained through a point multiplication operation based on a K vector, a Q vector, and a V vector, and the feature map output at the target network layer includes outputs of M third branches of the M attention heads.

The data processing module is configured to: perform N target operations on the outputs of the M third branches, to obtain N third feature maps, and fuse the N third feature maps and the outputs of the M third branches.

In a possible implementation, the data processing module is configured to perform a concatenation operation on the N third feature maps and the outputs of the M third branches.

In a possible implementation, the target network layer includes a feed-forward layer FFN.

In a possible implementation, the FFN includes an intermediate layer, the intermediate layer includes X groups of neurons, and the feature map output at the target network layer includes X feature map outputs of the X groups of neurons.

The data processing module is configured to: perform N target operations on the X feature map outputs, to obtain N fourth feature maps, and fuse the N fourth feature maps and the feature map outputs of the X groups of neurons.

In a possible implementation, the data processing module is configured to perform a concatenation operation on the N fourth feature maps and the X feature map outputs of the X groups of neurons.

In a possible implementation, the FFN includes an intermediate layer and an output layer, the intermediate layer includes X groups of neurons, the output layer is used to process the X feature map outputs of the X groups of neurons, to obtain X outputs at the output layer, and the feature map output at the target network layer includes the X outputs at the output layer.

The data processing module is configured to: perform N target operations on the X outputs at the output layer, to obtain N fifth feature maps, and fuse the N fifth feature maps and the X outputs at the output layer.

In a possible implementation, the data processing module is configured to perform an addition operation on the N fifth feature maps and the X outputs at the output layer.

In a possible implementation, the apparatus further includes:

a model training module 2103, configured to perform model training on the transformer model based on the data processing result, to obtain a trained transformer model.

For specific descriptions of the model training module 2103, refer to descriptions in step 2003. Details are not described herein again.

In a possible implementation, the obtaining module is configured to: obtain a performance requirement, where the performance requirement indicates data processing accuracy of the transformer model; and

determine a quantity of target modules and an insertion position of the target module in the transformer model based on the performance requirement.

In a possible implementation, higher data processing accuracy indicates a larger quantity of target modules; and/or higher data processing accuracy indicates a shorter distance between an insertion position of the target module in the transformer model and an embedding layer of the transformer model.

In a possible implementation, the transformer model is a model obtained through compression processing.

In a possible implementation, the processing the to-be-processed data by using the transformer model includes: performing, by using the transformer model, processing corresponding to a target task on the to-be-processed data, where the target task includes: reading comprehension, text translation, paraphrase recognition, named entity recognition, text emotion analysis, natural language inference, text automatic question answering, text intention recognition, text classification, text simplification, or text story generation.

An embodiment of this application further provides a data processing apparatus. The apparatus includes:

a receiving module, configured to receive a performance requirement sent by a device side, where the performance requirement indicates data processing accuracy of a transformer model and/or a model size of the transformer model; an obtaining module, configured to obtain, based on the performance requirement, a target transformer model that meets the performance requirement, where the target transformer model includes a target network layer and a target module, the target module is configured to: perform a target operation on a feature map output at the target network layer, to obtain an operation result, and fuse the operation result and the feature map output, and the target operation is a non-linear operation based on convolution; and a sending module, configured to send the target transformer model to the device side.

In a possible implementation, the performance requirement includes at least one of the following:

a precision requirement of the model, a delay requirement of the model, or a model compression ratio requirement of the model.

In a possible implementation, the obtaining module is specifically configured to:

obtain a first transformer model;
determine a quantity M of target modules and an insertion position of the target module in the first transformer model based on the performance requirement; and
obtain the target transformer model based on the first transformer model, the quantity M of target modules, and the insertion position of the target model.

In a possible implementation, higher data processing accuracy indicates a larger quantity of target modules;

higher data processing accuracy indicates a shorter distance between an insertion position of the target module in the transformer model and an embedding layer of the transformer model; and/or
a larger model size indicates a larger quantity of target modules.

In a possible implementation, the obtaining the target transformer model based on the first transformer model, the quantity of target modules, and the insertion position of the target model includes:

inserting the M target modules into the first transformer model based on the quantity of target modules and the insertion position of the target model, to obtain a second transformer model; and
performing model training on the second transformer model, to obtain the target transformer model.

In a possible implementation, the obtaining module is specifically configured to:

receive a compression indication, sent by the device side, for an initial transformer model; and
obtain the initial transformer model, and performing compression processing on the initial transformer model, to obtain the first transformer model.

The following describes an execution device according to an embodiment of this application. FIG. 22 is a schematic diagram of a structure of an execution device according to an embodiment of this application. An execution device 2200 may specifically be represented as a virtual reality VR device, a mobile phone, a tablet computer, a notebook computer, an intelligent wearable device, a monitoring data processing device, a server, or the like. This is not limited herein. Specifically, the execution device 2200 includes: a receiver 2201, a transmitter 2202, a processor 2203, and a memory 2204 (there may be one or more processors 2203 in the execution device 2200, and one processor is used as an example in FIG. 22). The processor 2203 may include an application processor 22031 and a communication processor 22032. In some embodiments of this application, the receiver 2201, the transmitter 2202, the processor 2203, and the memory 2204 may be connected through a bus or in another manner.

The memory 2204 may include a read-only memory and a random access memory, and provide an instruction and data to the processor 2203. A part of the memory 2204 may further include a nonvolatile random access memory (nonvolatile random access memory, NVRAM). The memory 2204 stores a processor and operation instructions, an executable module or a data structure, a subnet thereof, or an extended set thereof. The operation instructions may include various operation instructions to implement various operations.

The processor 2203 controls an operation of the execution device. During specific application, components of the execution device are coupled to each other by using a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 2203, or may be implemented by the processor 2203. The processor 2203 may be an integrated circuit chip with a signal processing capability. In an implementation process, steps in the foregoing method can be implemented by using a hardware integrated logical circuit in the processor 2203 or by using instructions in a form of software. The processor 2203 may be a general-purpose processor, a digital signal processor (digital signal processor, DSP), a microprocessor, or a microcontroller. The processor 2203 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 2203 may implement or perform the methods, the steps, and logical block diagrams that are disclosed in embodiments of this application. The general-purpose processor may be a microprocessor, or the processor may be any conventional processor or the like. Steps of the method disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 2204, and the processor 2203 reads information in the memory 2204 and completes the steps in the foregoing methods in combination with hardware of the processor.

The receiver 2201 may be configured to receive input digital or character information, and generate a signal input related to setting and function control of the execution device. The transmitter 2202 may be configured to output digital or character information through a first interface. The transmitter 2202 may further be configured to send instructions to a disk group through the first interface, to modify data in the disk group. The transmitter 2202 may further include a display device such as a display screen.

In this embodiment of this application, in one case, the processor 2203 is configured to perform the data processing method performed by the device in the embodiment corresponding to FIG. 6a.

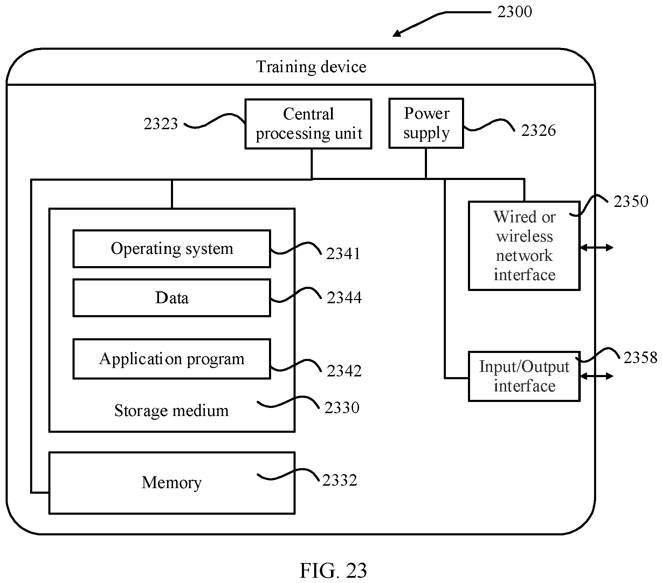

An embodiment of this application further provides a training device. FIG. 23 is a schematic diagram of a structure of a training device according to an embodiment of this application. The data processing apparatus described in the embodiments corresponding to FIG. 17 to FIG. 20a may be deployed on a training device 2300. Specifically, the training device 2300 is implemented by one or more servers. The training device 2300 may vary greatly with configuration or performance, and may include one or more central processing units (central processing unit, CPU) 2323 (for example, one or more processors), a memory 2332, and one or more storage media 2330 (for example, one or more mass storage devices) that store an application program 2342 or data 2344. The memory 2332 and the storage medium 2330 may be transient storages or persistent storages. The program stored in the storage medium 2330 may include one or more modules (not shown in the figure), and each module may include a series of instruction operations for the training device. Further, the central processing unit 2323 may be configured to communicate with the storage medium 2330, and perform the series of instruction operations in the storage medium 2330 on the training device 2300.

The training device 2300 may further include one or more power supplies 2326, one or more wired or wireless network interfaces 2350, one or more input/output interfaces 2358, or one or more operating systems 2341, for example, Windows Server™, Mac OS X™, Unix™, Linux™, and FreeBSD™.

In this embodiment of this application, the central processing unit 2323 is configured to perform the data processing method in the embodiments corresponding to FIG. 20a and FIG. 20b.

An embodiment of this application further provides a computer program product. When the computer program product runs on a computer, the computer is enabled to perform steps performed by the execution device or steps performed by the training device.

An embodiment of this application further provides a computer-readable storage medium. The computer-readable storage medium stores a program used for signal processing. When the program is run on a computer, the computer is enabled to perform steps performed by the execution device or steps performed by the training device.

The execution device, the training device, or the terminal device in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in an execution device performs the data processing method described in the foregoing embodiments, or a chip in a training device performs the data processing method described in the foregoing embodiments. Optionally, the storage unit is a storage unit in the chip, for example, a register or a cache. The storage unit may alternatively be a storage unit that is in a wireless access device and that is outside the chip, for example, a read-only memory (read-only memory, ROM) or another type of static storage device that can store static information and instructions, or a random access memory (random access memory, RAM).

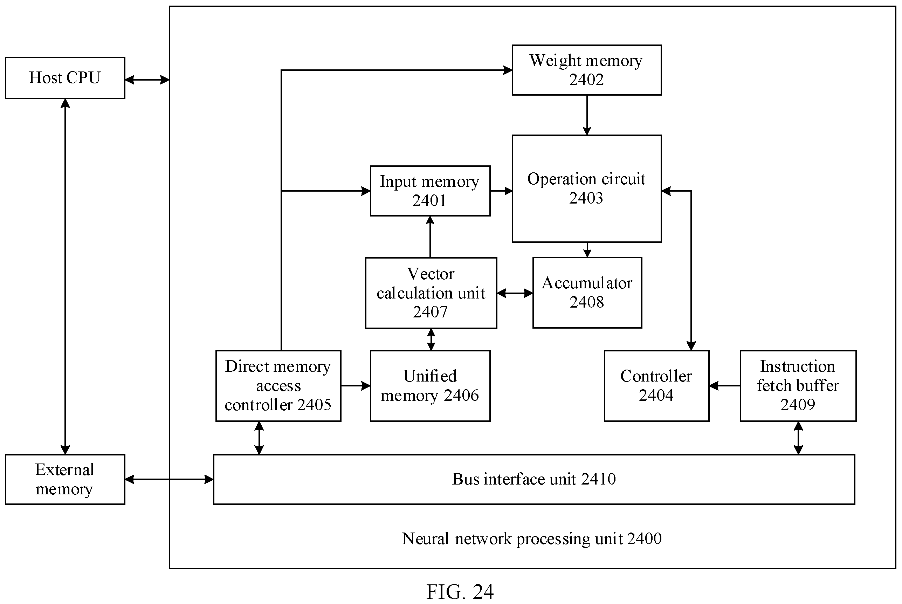

Specifically, FIG. 24 is a schematic diagram of a structure of a chip according to an embodiment of this application. The chip may be represented as a neural network processing unit NPU 2400. The NPU 2400 is mounted to a host CPU (Host CPU) as a coprocessor, and the host CPU allocates a task. A core part of the NPU is an operation circuit 2403, and a controller 2404 controls the operation circuit 2403 to extract matrix data in a memory and perform a multiplication operation.

In some implementations, the operation circuit 2403 internally includes a plurality of process engines (Process Engine, PE). In some implementations, the operation circuit 2403 is a two-dimensional systolic array. The operation circuit 2403 may alternatively be a one-dimensional systolic array or another electronic circuit capable of performing mathematical operations such as multiplication and addition. In some implementations, the operation circuit 2403 is a general-purpose matrix processor.

For example, it is assumed that there is an input matrix A, a weight matrix B, and an output matrix C. The operation circuit fetches, from a weight memory 2402, data corresponding to the matrix B, and caches the data on each PE in the operation circuit. The operation circuit fetches data of the matrix A from an input memory 2401, to perform a matrix operation on the matrix B, and stores an obtained partial result or an obtained final result of the matrix in an accumulator (accumulator) 2408.

A unified memory 2406 is configured to store input data and output data. The weight data is directly transferred to the weight memory 2402 by using a direct memory access controller (direct memory access controller, DMAC) 2405. The input data is also transferred to the unified memory 2406 by using the DMAC.

A BIU is a bus interface unit, namely, a bus interface unit 2410, and is configured for interaction between an AXI bus and the DMAC and interaction between the AXI bus and an instruction fetch buffer (Instruction Fetch Buffer, IFB) 2409.

The bus interface unit (bus interface unit, BIU) 2410 is used by the instruction fetch buffer 2409 to obtain instructions from an external memory, and is further used by the direct memory access controller 2405 to obtain original data of the input matrix A or the weight matrix B from the external memory.

The DMAC is mainly configured to transfer input data in the external memory DDR to the unified memory 2406, transfer weight data to the weight memory 2402, or transfer input data to the input memory 2401.

A vector calculation unit 2407 includes a plurality of operation processing units. If required, further processing is performed on an output of the operation circuit, for example, vector multiplication, vector addition, an exponential operation, a logarithmic operation, or size comparison. The vector calculation unit 2407 is mainly configured to perform network calculation at a non-convolutional/fully connected layer of a neural network, for example, batch normalization (batch normalization), pixel-level summation, and upsampling a feature map.

In some implementations, the vector calculation unit 2407 can store a processed output vector in the unified memory 2406. For example, the vector calculation unit 2407 may apply a linear function or a nonlinear function to the output of the operation circuit 2403, for example, perform linear interpolation on a feature plane extracted at a convolutional layer. For another example, the linear function or the nonlinear function is applied to a vector of an accumulated value to generate an activation value. In some implementations, the vector calculation unit 2407 generates a normalized value, a pixel-level summation value, or both. In some implementations, the processed output vector can be used as activation input of the operation circuit 2403, for example, to be used in a subsequent layer in the neural network.

The instruction fetch buffer (instruction fetch buffer) 2409 connected to the controller 2404 is configured to store instructions used by the controller 2404.

The unified memory 2406, the input memory 2401, the weight memory 2402, and the instruction fetch buffer 2409 are all on-chip memories. The external memory is private to a hardware architecture of the NPU.

Any processor mentioned above may be a general-purpose central processing unit, a microprocessor, an ASIC, or one or more integrated circuits for controlling the program execution.

In addition, it should be noted that the apparatus embodiments described above are merely an example. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may specifically be implemented as one or more communication buses or signal cables.

Based on descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially, or the part contributing to a current technology may be implemented in a form of a software product. The computer software product is stored in a readable storage medium, for example, a floppy disk, a USB flash drive, a removable hard disk, a ROM, a RAM, a magnetic disk, or an optical disc on a computer, and includes several instructions for instructing a computer device (that may be a personal computer, a training device, or a network device) to perform the method described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instruction may be transmitted from a website, computer, training device, or data center to another website, computer, training device, or data center in a wired (for example, using a coaxial cable, an optical fiber, or a digital subscriber line (DSL)) or wireless (for example, via infrared, radio, or microwaves) manner. The computer-readable storage medium may be any usable medium accessible by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk, (Solid-State Disk, SSD)), or the like.

## Claims

1.  A data processing method, wherein the method comprises:

    obtaining a transformer model, wherein the transformer model comprises a target network layer and a target module; and
    obtaining to-be-processed data, and processing the to-be-processed data by using the transformer model, to obtain a data processing result, wherein the target module is configured to: perform a target operation on a feature map output at the target network layer, to obtain an operation result, and fuse the operation result and the feature map output, to obtain an updated feature map output, and the target operation is a non-linear operation based on convolution.

2. The method according to claim 1, wherein a weight parameter comprised in a convolution kernel used for the convolution is obtained through regularization processing.

3. The method according to claim 2, wherein the convolution kernel used for the convolution meets at least one of the following conditions:

   a difference between a sum of weight parameters comprised in the convolution kernel and 1 falls within a preset range; and
   the weight parameter comprised in the convolution kernel is a positive number.

4. The method according to any one of claims 1 to 3, wherein the feature map output and the updated feature map output are consistent in length and width.

5. The method according to any one of claims 2 to 4, wherein the non-linear operation is used to perform non-linear processing on a result obtained through the convolution.

6. The method according to any one of claims 1 to 5, wherein the target network layer comprises an attention layer.

7. The method according to claim 6, wherein the attention layer comprises M attention heads, and the feature map output at the target network layer comprises M feature map outputs of the M attention heads; and
   the performing a target operation on a feature map output at the target network layer, to obtain an operation result, and fusing the operation result and the feature map output comprises:
   performing N target operations on the M feature map outputs, to obtain N first feature maps, and fusing the N first feature maps and the M feature map outputs of the M attention heads.

8. The method according to claim 7, wherein the fusing the N first feature maps and the M feature map outputs of the M attention heads comprises:
   performing an addition operation on the N first feature maps and the M feature map outputs of the M attention heads.

9. The method according to claim 6, wherein the attention layer comprises M attention heads, each of the M attention heads comprises a first branch and a second branch, an output of the first branch is obtained through a point multiplication operation based on a K vector and a Q vector, an output of the second branch is obtained based on a V vector, and the feature map output at the target network layer comprises outputs of M first branches of the M attention heads; and
   the performing a target operation on a feature map output at the target network layer, to obtain an operation result, and fusing the operation result and the feature map output comprises:
   performing N target operations on the outputs of the M first branches, to obtain N second feature maps, and fusing the N second feature maps and the outputs of the M first branches.

10. The method according to claim 9, wherein the fusing the N second feature maps and the outputs of the M first branches comprises:
    performing a concatenation (concat) operation on the N second feature maps and the outputs of the M first branches.

11. The method according to claim 6, wherein the attention layer comprises M attention heads, each of the M attention heads comprises a third branch, an output of the third branch is obtained through a point multiplication operation based on a K vector, a Q vector, and a V vector, and the feature map output at the target network layer comprises outputs of M third branches of the M attention heads; and
    the performing a target operation on a feature map output at the target network layer, to obtain an operation result, and fusing the operation result and the feature map output comprises:
    performing N target operations on the outputs of the M third branches, to obtain N third feature maps, and fusing the N third feature maps and the outputs of the M third branches.

12. The method according to claim 11, wherein the fusing the N third feature maps and the outputs of the M third branches comprises:

performing a concatenation operation on the N third feature maps and the outputs of the M third branches.

13. The method according to any one of claims 1 to 5, wherein the target network layer comprises a feed-forward layer FFN.

14. The method according to claim 13, wherein the FFN comprises an intermediate layer, the intermediate layer comprises X groups of neurons, and the feature map output at the target network layer comprises X feature map outputs of the X groups of neurons; and
the performing a target operation on a feature map output at the target network layer, to obtain an operation result, and fusing the operation result and the feature map output comprises:
performing N target operations on the X feature map outputs, to obtain N fourth feature maps, and fusing the N fourth feature maps and the feature map outputs of the X groups of neurons.

15. The method according to claim 14, wherein the fusing the N fourth feature maps and the feature map outputs of the X groups of neurons comprises:
performing a concatenation operation on the N fourth feature maps and the X feature map outputs of the X groups of neurons.

16. The method according to claim 13, wherein the FFN comprises an intermediate layer and an output layer, the intermediate layer comprises X groups of neurons, the output layer is used to process X feature map outputs of the X groups of neurons, to obtain X outputs at the output layer, and the feature map output at the target network layer comprises the X outputs at the output layer; and
the performing a target operation on a feature map output at the target network layer, to obtain an operation result, and fusing the operation result and the feature map output comprises:
performing N target operations on the X outputs at the output layer, to obtain N fifth feature maps, and fusing the N fifth feature maps and the X outputs at the output layer.

17. The method according to claim 16, wherein the fusing the N fifth feature maps and the X outputs at the output layer comprises:
performing an addition operation on the N fifth feature maps and the X outputs at the output layer.

18. The method according to any one of claims 1 to 17, wherein after the processing the to-be-processed data by using the transformer model, the method further comprises:
performing model training on the transformer model based on the data processing result, to obtain a trained transformer model.

19. The method according to claim 18, wherein before the obtaining a transformer model, the method further comprises:

obtaining a performance requirement, wherein the performance requirement indicates data processing accuracy of the transformer model and/or a model size of the transformer model; and
determining a quantity of target modules and an insertion position of the target module in the transformer model based on the performance requirement.

20. The method according to claim 18, wherein higher data processing accuracy indicates a larger quantity of target modules; higher data processing accuracy indicates a shorter distance between an insertion position of the target module in the transformer model and an embedding layer of the transformer model; and/or a larger model size indicates a larger quantity of target modules.

21. The method according to claim 18 or 19, wherein the transformer model is a model obtained through compression processing.

22. The method according to any one of claims 1 to 21, wherein the processing the to-be-processed data by using the transformer model comprises:
performing, by using the transformer model, processing corresponding to a target task on the to-be-processed data, wherein the target task comprises: reading comprehension, text translation, paraphrase recognition, named entity recognition, text emotion analysis, natural language inference, text automatic question answering, text intention recognition, text classification, text simplification, or text story generation.

23. A data processing method, wherein the method comprises:

    receiving a performance requirement sent by a device side, wherein the performance requirement indicates data processing accuracy of a transformer model and/or a model size of the transformer model;
    obtaining, based on the performance requirement, a target transformer model that meets the performance requirement, wherein the target transformer model comprises a target network layer and a target module, the target module is configured to: perform a target operation on a feature map output at the target network layer, to obtain an operation result, and fuse the operation result and the feature map output, and the target operation is a non-linear operation based on convolution; and
    sending the target transformer model to the device side.

24. The method according to claim 23, wherein the performance requirement comprises at least one of the following: a precision requirement of the model, a delay requirement of the model, or a model compression ratio requirement of the model.

25. The method according to claim 23 or 24, wherein the obtaining, based on the performance requirement, a target transformer model that meets the performance requirement comprises:

    obtaining a first transformer model;
    determining a quantity M of target modules and an insertion position of the target module in the first transformer model based on the performance requirement; and
    obtaining the target transformer model based on the first transformer model, the quantity M of target modules, and the insertion position of the target model.

26. The method according to claim 25, wherein higher data processing accuracy indicates a larger quantity of target modules;

    higher data processing accuracy indicates a shorter distance between an insertion position of the target module in the transformer model and an embedding layer of the transformer model; and/or
    a larger model size indicates a larger quantity of target modules.

27. The method according to claim 25 or 26, wherein the obtaining the target transformer model based on the first transformer model, the quantity of target modules, and the insertion position of the target model comprises:

    inserting the M target modules into the first transformer model based on the quantity of target modules and the insertion position of the target model, to obtain a second transformer model; and
    performing model training on the second transformer model, to obtain the target transformer model.

28. The method according to any one of claims 25 to 27, wherein the obtaining a first transformer model comprises:

    receiving a compression indication, sent by the device side, for an initial transformer model; and
    obtaining the initial transformer model, and performing compression processing on the initial transformer model, to obtain the first transformer model.

29. A data processing apparatus, wherein the apparatus comprises a memory and a processor, the memory stores code, and the processor is configured to obtain the code and perform the method according to any one of claims 1 to 28.

30. A computer-readable storage medium, comprising computer-readable instructions, wherein when the computer-readable instructions are run on a computer device, the computer device is enabled to perform the method according to any one of claims 1 to 28.

31. A computer program product, comprising computer-readable instructions, wherein when the computer-readable instructions are run on a computer device, the computer device is enabled to perform the method according to any one of claims 1 to 28.

FIG. 1

FIG. 2

FIG. 3

300

Data storage system 350

Execution device 310

...

Communication network

Local device 301

Local device 302

For example

FIG. 4

FIG. 5a

FIG. 5b

Obtain a transformer model, where the transformer model includes a target network layer and a target module ⟋ 601

Obtain to-be-processed data, and process the to-be-processed data by using the transformer model, to obtain a data processing result, where the target module is configured to: perform a target operation on a feature map output at the target network layer, to obtain an operation result, and fuse the operation result and the feature map output, to obtain an updated feature map output, and the target operation is a non-linear operation based on convolution ⟋ 602

FIG. 6a

FIG. 6b

Speech recognition module
Convert sound information into text

Natural language understanding module
Understand content

Model to which a ghost module is added

Ghost module

Transformer model

Input

Output

Speech synthesis module
Convert the text into sound

Transformer model

Transformer layer

...

Transformer layer

Embedding layer

FIG. 7

$X_{l+1}$

Transformer layer

Addition and
normalization layer

Feed-forward layer
FFN

Intermediate layer

1 2 3 ... N

Addition and
normalization layer

Multi-head attention
layer

Head
1

Head
2

...

Head
N

$X_l$

FIG. 8

FIG. 9

FIG. 10

FIG. 11

Input X

(Pruned)
MHA

(Pruned)
FFN

Ghost features

$\{g_{1,h}\}_{h=1}^{M}$

$\{g_{2,h}\}_{h=1}^{M}$

$\{g_{N,h}\}_{h=1}^{M}$

$G_1$

$G_2$

$G_N$

Original features

$H_1$

$H_2$

$H_M$

G-MHA (X)
or
G-FFN (X)

FIG. 12

FIG. 13

FIG. 14

FIG. 15

FIG. 16

FIG. 17

Performance requirement information

Model effect improvement service

Basic model

Input → Transformer model → Output

Model to which a ghost module is added

Ghost module

Input → Transformer model → ⊕ → Output

FIG. 18

Basic model

Input → Transformer model → Output

Performance requirement information

Model compression service

Model compression

Input → Small transformer model → Output

Model to which a ghost module is added

Ghost module

Input → Small transformer model → ⊕ → Output

FIG. 19

Obtain a transformer model, where the transformer model includes a target network layer and a target module — 2001

Obtain to-be-processed data, and process the to-be-processed data by using the transformer model, to obtain a data processing result, where the target module is configured to: perform a target operation on a feature map output at the target network layer, to obtain an operation result, and fuse the operation result and the feature map output, to obtain an updated feature map output, and the target operation is a non-linear operation based on convolution — 2002

Perform model training on the transformer model based on the data processing result, to obtain a trained transformer model — 2003

FIG. 20a

Receive a performance requirement sent by a device side, where the performance requirement indicates data processing accuracy of a transformer model and/or a model size of the transformer model — 2004

Obtain, based on the performance requirement, a target transformer model that meets the performance requirement, where the target transformer model includes a target network layer and a target module, the target module is configured to: perform a target operation on a feature map output at the target network layer, to obtain an operation result, and fuse the operation result and the feature map output, and the target operation is a non-linear operation based on convolution — 2005

Send the target transformer model to the device side — 2006

FIG. 20b

2100

2101

Obtaining module

2102

Data processing
module

2103

Model training
module

FIG. 21

2200

Execution device

Antenna

Antenna

Receiver 2201

Transmitter 2202

Processor 2203

Memory
2204

Application
processor
22031

Communication
processor
22032

FIG. 22

EP 4 336 378 A1

2300

Training device

2323 ⌇ Central processing unit   Power supply ⌇ 2326

Wired or wireless network interface ⌇ 2350

Operating system ⌇ 2341

Data ⌇ 2344

Application program ⌇ 2342

Storage medium ⌇ 2330

Input/Output interface ⌇ 2358

Memory ⌇ 2332

FIG. 23

56

FIG. 24

Neural network processing unit 2400

Host CPU

External memory

Weight memory 2402

Input memory 2401

Operation circuit 2403

Vector calculation unit 2407

Accumulator 2408

Direct memory access controller 2405

Unified memory 2406

Controller 2404

Instruction fetch buffer 2409

Bus interface unit 2410

## INTERNATIONAL SEARCH REPORT

International application No.

**PCT/CN2022/094995**

### A. CLASSIFICATION OF SUBJECT MATTER

G06F 16/33(2019.01)i; G06F 16/332(2019.01)i; G06N 3/04(2006.01)i; G06N 3/08(2006.01)i; G06N 5/04(2006.01)i

According to International Patent Classification (IPC) or to both national classification and IPC

### B. FIELDS SEARCHED

Minimum documentation searched (classification system followed by classification symbols)

G06F G06N

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 特征图; 非线性; 正则; 权重; 注意力; 卷积; 拼接; 前馈; 中间层; 神经元; transformer; feature map; right; attention; neural; non-linear; concat; feed forward; intermediate layer

### C. DOCUMENTS CONSIDERED TO BE RELEVANT

| Category* | Citation of document, with indication, where appropriate, of the relevant passages | Relevant to claim No. |
|---|---|---|
| PX | CN 113505193 A (HUAWEI TECHNOLOGIES CO., LTD.) 15 October 2021 (2021-10-15) entire document | 1-31 |
| Y | CN 111368993 A (HUAWEI TECHNOLOGIES CO., LTD.) 03 July 2020 (2020-07-03) description, paragraphs 398-901, and figures 1-23 | 1-31 |
| Y | CN 110688860 A (UNIVERSITY OF ELECTRONIC SCIENCE AND TECHNOLOGY OF CHINA) 14 January 2020 (2020-01-14) description, paragraphs [0002]-[0039] | 1-31 |
| A | CN 112257858 A (HUAWEI TECHNOLOGIES CO., LTD.) 22 January 2021 (2021-01-22) entire document | 1-31 |

☐ Further documents are listed in the continuation of Box C.　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 August 2022** | **09 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/094995**

| Patent document cited in search report | | | Publication date (day/month/year) | Patent family member(s) | | | Publication date (day/month/year) |
|---|---|---|---|---|---|---|---|
| CN | 113505193 | A | 15 October 2021 | None | | | |
| CN | 111368993 | A | 03 July 2020 | WO | 2021159714 | A1 | 19 August 2021 |
| CN | 110688860 | A | 14 January 2020 | None | | | |
| CN | 112257858 | A | 22 January 2021 | WO | 2022057776 | A1 | 24 March 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110611218